# EUROPEAN PATENT SPECIFICATION

(11) **EP 4 191 162 B1**
(45) Date of publication and mention of the grant of the patent: **23.09.2026**
(21) Application number: 21851133.5
(22) Date of filing: 30.07.2021
(51) Int. Cl.: F25B 1/00, C09K 5/04

(54) **REFRIGERANT-CONTAINING COMPOSITION, USE THEREOF, REFRIGERATOR HAVING SAME, AND METHOD FOR OPERATING SAID REFRIGERATOR**
KÄLTEMITTELHALTIGE ZUSAMMENSETZUNG, VERWENDUNG DAVON, KÜHLSCHRANK DAMIT UND VERFAHREN ZUM BETRIEB DES KÜHLSCHRANKS
COMPOSITION CONTENANT UN RÉFRIGÉRANT, SON UTILISATION, RÉFRIGÉRATEUR LA COMPRENANT, ET PROCÉDÉ POUR FAIRE FONCTIONNER LEDIT RÉFRIGÉRATEUR

(30) Priority: 30.07.2020 JP 2020129434
(43) Date of publication of application: 07.06.2023
(73) Proprietor: Daikin Industries, Ltd., Osaka-shi, Osaka 530-0001 (JP)
(72) Inventor: ITANO, Mitsushi, Osaka-shi, Osaka 530-0001 (JP); OHKUBO, Shun, Osaka-shi, Osaka 530-0001 (JP); KARUBE, Daisuke, Osaka-shi, Osaka 530-0001 (JP); TOKUNO, Satoshi, Osaka-shi, Osaka 530-0001 (JP)
(74) Representative: Hoffmann Eitle
(86) International application number: PCT/JP2021/028482
(87) International publication number: WO 2022/025287

(56) References cited:
- WO-A1-2015/125874
- WO-A1-2015/186557
- WO-A1-2020/256133
- WO-A1-2020/262209
- JP-A- 2015 229 767
- US-A1- 2011 252 801

## Description

### Technical Field

The present disclosure relates to a composition comprising a refrigerant, use of the composition, a refrigerating machine having the composition, and a method for operating the refrigerating machine.

### Background Art

R410A is currently used as an air conditioning refrigerant for e.g. home air conditioners. R410A is a two-component mixed refrigerant of difluoromethane (CH₂F₂: HFC-32 or R32) and pentafluoroethane (C₂HF₅: HFC-125 or R125), and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (WO 2015/141678).

EP-A-3 109 292 (WO 2015/125874) discloses a working fluid for heat cycle, which contains trifluoroethylene and difluoroethylene, wherein, based on the working fluid, the proportion of trifluoroethylene is at least 8.5 mass% and that of difluoroethylene is less than 1.5 mass%.

### Summary of Invention

### Technical Problem

An object of the present disclosure is to provide a novel low-GWP mixed refrigerant.

### Solution to Problem

The present invention provides a composition comprising a refrigerant comprising difluoromethane (R32), trans-1,2-difluoroethylene (HFO-1132(E)), 1,3,3,3-tetrafluoropropene (R1234ze), and 1,1-difluoroethylene (HFO-1132a) (also referred to as "the present composition" hereinafter).

Also, the present invention provides the use of the present composition as an alternative refrigerant for R410A.

Furthermore, the present invention provides the use of the present composition as a working fluid for a refrigerating machine.

Yet further, the present invention provides (i) a refrigerating machine comprising the present composition as a working fluid, and (ii) a method for operating a refrigerating machine, comprising circulating the present composition as a working fluid in a refrigerating machine.

Preferred embodiments of the invention are as defined in the appended dependent claims and/or in the following detailed description

### Advantageous Effects of Invention

The present refrigerant has a low GWP.

### Brief Description of Drawings

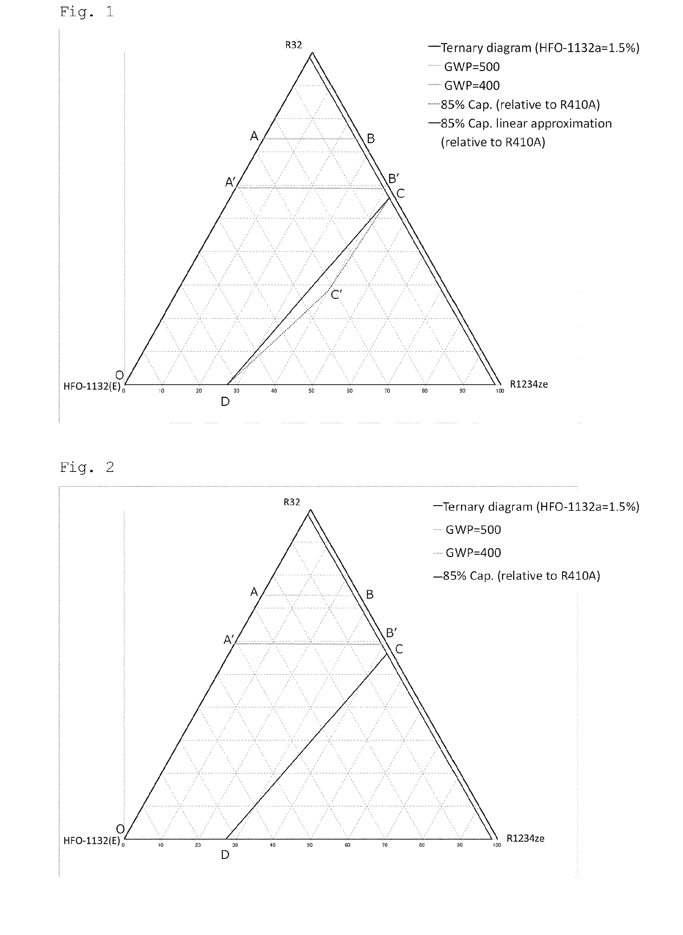

Fig. 1 shows points A to D, points A' to C', and point O, as well as line segments connecting these points in a ternary composition diagram in which the sum of R32, HFO-1132(E), and R1234ze is 98.5 mass% (the HFO-1132a content is 1.5 mass%).
Fig. 2 shows points A to D, points A' and B', and point O, as well as line segments connecting these points in a ternary composition diagram in which the sum of R32, HFO-1132(E), and R1234ze is 98.5 mass% (the HFO-1132a content is 1.5 mass%).

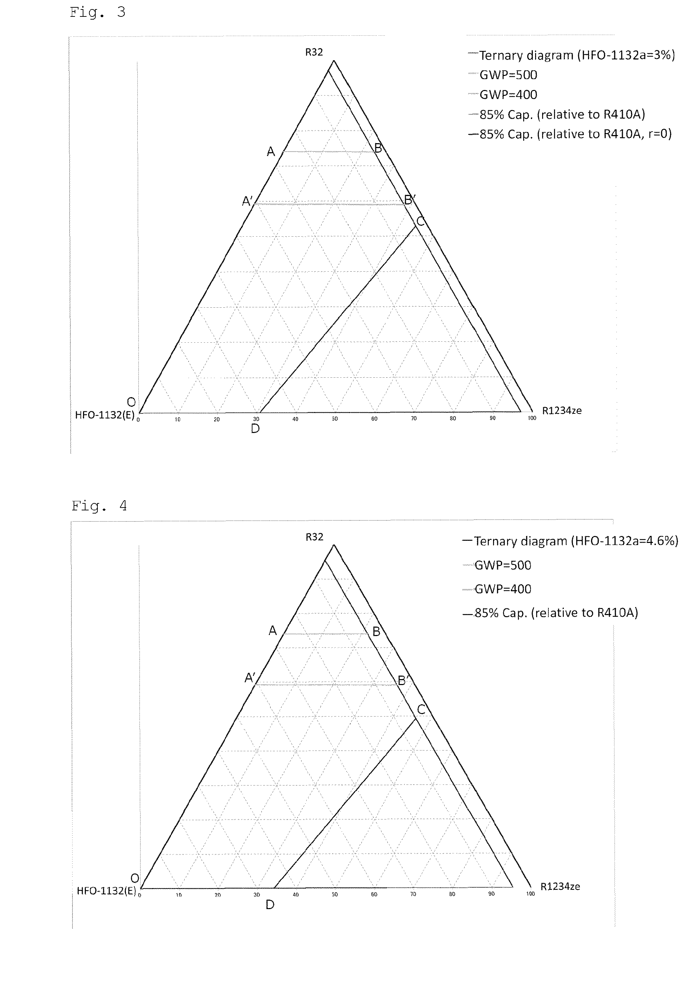

Fig. 3 shows points A to D, points A' and B', and point O, as well as line segments connecting these points in a ternary composition diagram in which the sum of R32, HFO-1132(E), and R1234ze is 97 mass% (the HFO-1132a content is 3 mass%).
Fig. 4 shows points A to D, points A' and B', and point O, as well as line segments connecting these points in a ternary composition diagram in which the sum of R32, HFO-1132(E), and R1234ze is 95.4 mass% (the HFO-1132a content is 4.6 mass%).

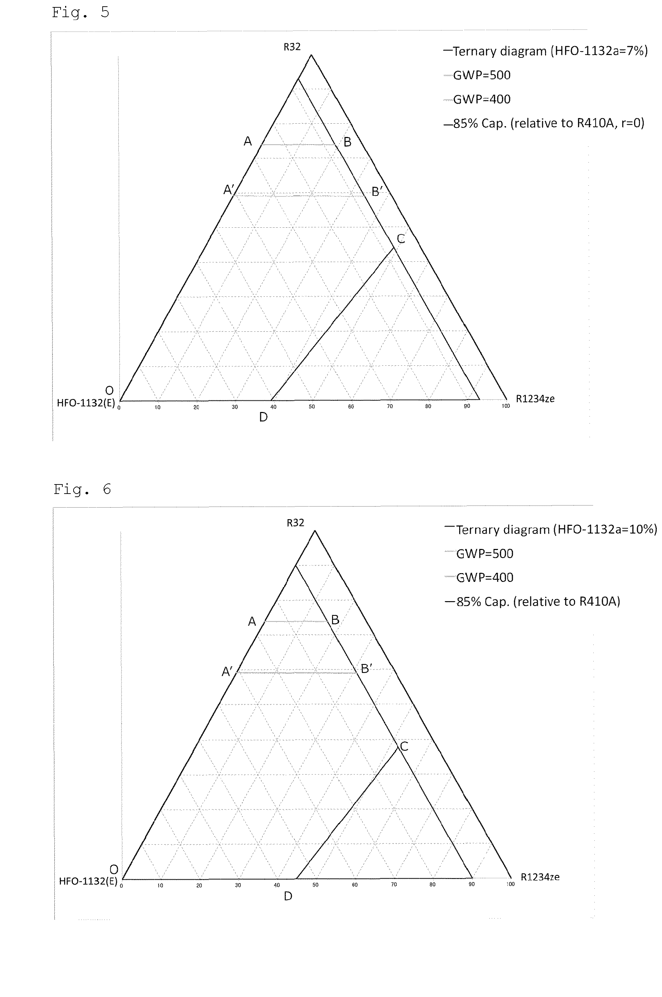

Fig. 5 shows points A to D, points A' and B', and point O, as well as line segments connecting these points in a ternary composition diagram in which the sum of R32, HFO-1132(E), and R1234ze is 93 mass% (the HFO-1132a content is 7 mass%).
Fig. 6 shows points A to D, points A' and B', and point O, as well as line segments connecting these points in a ternary composition diagram in which the sum of R32, HFO-1132(E), and R1234ze is 90 mass% (the HFO-1132a content is 10 mass%).

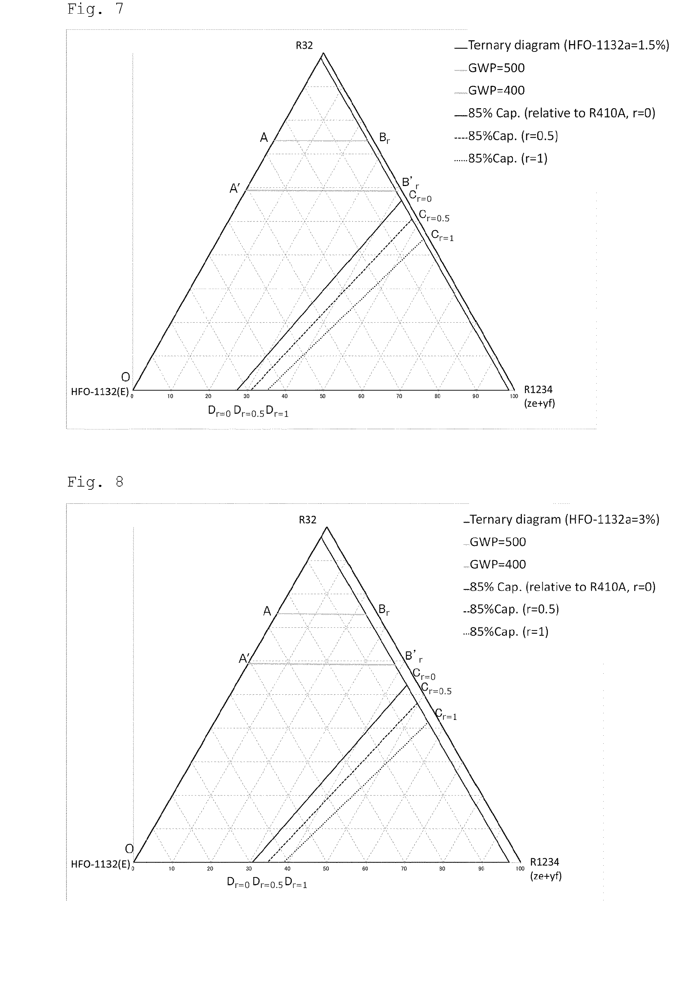

Fig. 7 shows point A, point A', points Bᵣ to Dᵣ, point Bᵣ' and point O, as well as line segments connecting these points in a ternary composition diagram in which the sum of R32, HFO-1132(E), and R1234ze is 98.5 mass% (the HFO-1132a content is 1.5 mass%).
Fig. 8 shows point A, point A', points Bᵣ to Dᵣ, point Bᵣ' and point O, as well as line segments connecting these points in a ternary composition diagram in which the sum of R32, HFO-1132(E), and R1234ze is 97 mass% (the HFO-1132a content is 3 mass%).

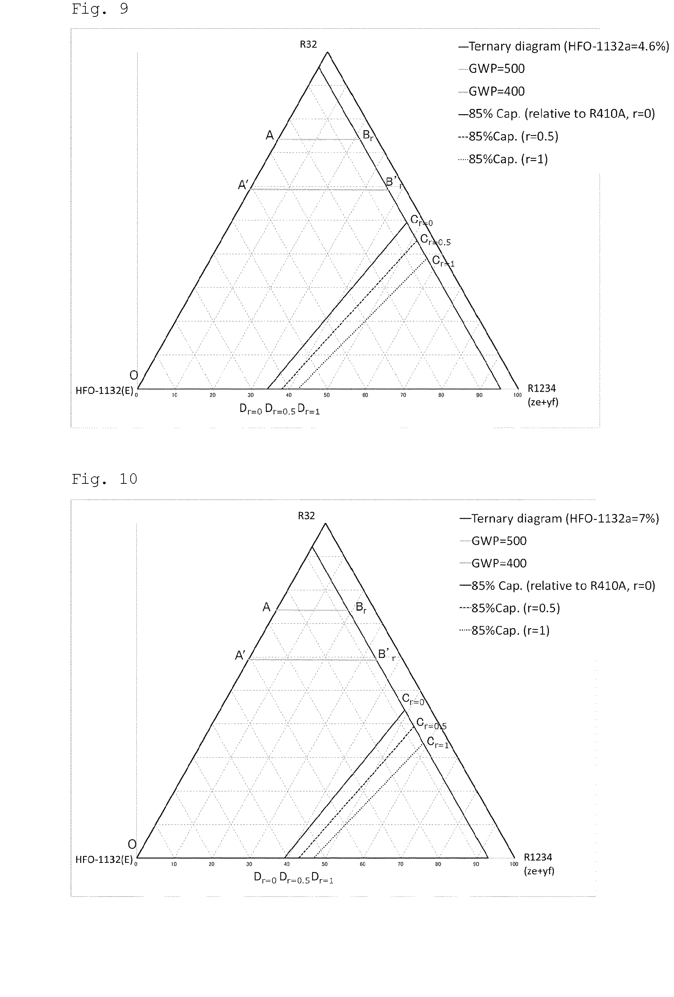

Fig. 9 shows point A, point A', points Bᵣ to Dᵣ, point Br' and point O, as well as line segments connecting these points in a ternary composition diagram in which the sum of R32, HFO-1132(E), and R1234ze is 95.4 mass% (the HFO-1132a content is 4.6 mass%).
Fig. 10 shows point A, point A', points Bᵣ to Dᵣ, point Br' and point O, as well as line segments connecting these points in a ternary composition diagram in which the sum of R32, HFO-1132(E), and R1234ze is 93 mass% (the HFO-1132a content is 7 mass%).

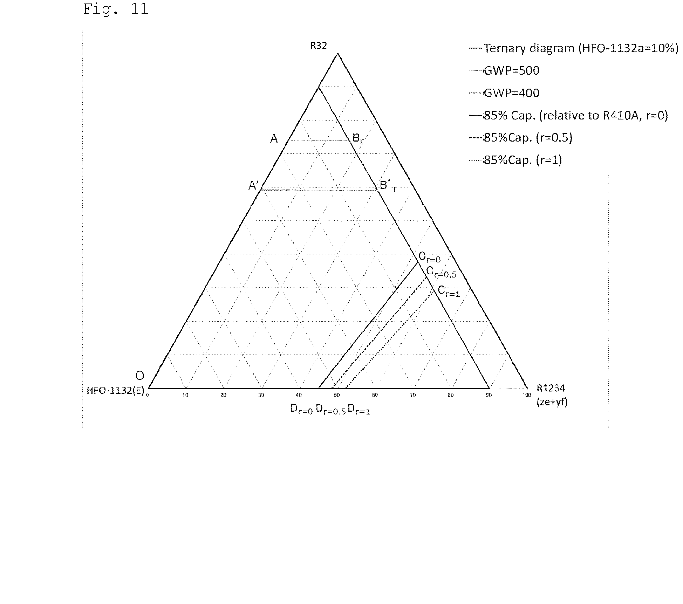

Fig. 11 shows point A, point A', points Bᵣ to Dᵣ, point Br' and point O, as well as line segments connecting these points in a ternary composition diagram in which the sum of R32, HFO-1132(E), and R1234ze is 90 mass% (the HFO-1132a content is 10 mass%).

### Description of Embodiments

The present inventors conducted intensive studies to solve the above problem, and consequently found that a mixed refrigerant comprising R32, HFO-1132(E), and R1234ze, as well as HFO-1132a has the above properties.

The present disclosure has been completed as a result of further research based on this finding. The present disclosure includes the following embodiments.

### Definition of Terms

The term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Examples of non-fluorocarbon compounds include propane (R290), propylene (R1270), butane (R600), isobutane (R600a), carbon dioxide (R744), and ammonia (R717).

The phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

When the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

The term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

### 1. Refrigerant

### 1.1 Refrigerant Component

The refrigerant of the present disclosure (also "the present refrigerant" hereinafter) comprises R32, HFO-1132(E), R1234ze, and HFO-1132a.

The present refrigerant is a low-GWP mixed refrigerant.

The present refrigerant preferably satisfies the following requirements. In this case, the present refrigerant has a GWP of 500 or less and a refrigerating capacity ratio of 85% or more relative to that of R410A.

### Requirements

When the mass% of R32, HFO-1132(E), R1234ze, and HFO-1132a based on their sum is respectively represented by x, y, z, and a, provided that 1.5≤a≤10.0, coordinates (x,y,z) in a ternary composition diagram in which the sum of R32, HFO-1132(E), and R1234ze is (100-a) mass% are within the range of a figure surrounded by straight lines AB, BC, CD, DO, and OA that connect the following 5 points:
point A (74.0, -a+26.0, 0.0),
point B (73.9, 0.0, -a+26.1),
point C (0.0087a²-2.2743a+59.574, 0.0, -0.0087a²+1.2743a+40.426),
point D (0.0, 0.0299a²-3.4018a+76.233, -0.0299a²+2.4018a+23.767), and
point O (0.0, 100.0-a, 0.0),
or on the straight lines AB and CD (excluding the points A, B, C, and D).

The present refrigerant preferably satisfies the following requirements. In this case, the present refrigerant has a GWP of 400 or less and a refrigerating capacity ratio of 85% or more relative to that of R410A.

### Requirements

When the mass% of R32, HFO-1132(E), R1234ze, and HFO-1132a based on their sum is respectively represented by x, y, z, and a, provided that 1.5≤a≤10.0, coordinates (x,y,z) in a ternary composition diagram in which the sum of R32, HFO-1132(E), and R1234ze is (100-a) mass% are within the range of a figure surrounded by straight lines A'B', B'C, CD, DO, and OA' that connect the following 5 points:
point A' (59.2, -a+40.8, 0.0),
point B' (0.0132a+58.891, 0.0, -1.0132a+41.109),
point C (0.0087a²-2.2743a+59.574, 0.0, -0.0087a²+1.2743a+40.426),
point D (0.0, 0.0299a²-3.4018a+76.233, -0.0299a²+2.4018a+23.767), and
point O (0.0, 100.0-a, 0.0),
or on the straight lines A'B' and CD (excluding the points A', B', C, and D).

The present refrigerant may further comprise R1234yf.

When the present refrigerant further comprises R1234yf, it preferably satisfies the following requirements. In this case, the present refrigerant has a GWP of 500 or less and a refrigerating capacity ratio of 85% or more relative to that of R410A.

### Requirements

When the mass% of R32 is represented by x, the mass% of HFO-1132(E) is represented by y, the total mass% of R1234ze and R1234yf is represented by z, and the mass% of HFO-1132a is represented by a, provided that 1.5≤a≤10.0, based on the sum of R32, HFO-1132(E), R1234ze, R1234yf, and HFO-1132a, and r = R1234yf/(R1234ze+R1234yf),
if 1.5≤a≤4.6, coordinates (x,y,z) in a ternary composition diagram having R32 as a first vertex, HFO-1132(E) as a second vertex, and the sum of R1234ze and R1234yf as a third vertex are within the range of a figure surrounded by straight lines ABᵣ, BᵣCᵣ, CᵣDᵣ, DᵣO, and OA that connect the following 5 points:
   point A (74.0, -a+26.0, 0.0),
   point Bᵣ (73.9, 0.0, -a+26.1),
   point Cᵣ ((0.0349a²+0.1094a-1.2427)r²+(-0.0202a²+0.0907a-10.591)r+(0.0255a²-2.3816a+59.715), 0.0, -a-x+100.0),
   point Dᵣ (0.0, (-0.2097a²+1.3435a-2.7435)r²+(0.2312a²-1.507a-5.0597)r+(0.0255a²-3.3816a+76.215), -a-y+100.0), and
   point O (0.0, 100.0-a, 0.0),
   or on the straight lines ABᵣ and CᵣDᵣ (excluding the points A, Bᵣ, Cᵣ, and Dᵣ); or
if 4.6≤a≤10.0, coordinates (x,y,z) in the ternary composition diagram are within the range of a figure surrounded by straight lines ABᵣ, BᵣCᵣ, CᵣDᵣ, DᵣO, and OA that connect the following 5 points:
   point A (74.0, -a+26.0, 0.0),
   point Bᵣ (73.9, 0.0, -a+26.1),
   point Cᵣ ((0.0494a²-0.5728a+1.5901)r₂+(-0.037a2+0.763a-13.326)r+(0.0062a²-2.2383a+59.465), 0.0, -a-x+100.0),
   point Dᵣ (0.0, (-0.0648a²+1.1685a-5.0037)r²+(0.0849a²-1.2762a-3.0253)r+(0.0262a²-3.346a+76.036), -a-y+100.0), and point O (0.0, 100.0-a, 0.0),
   or on the straight lines ABᵣ and CᵣDᵣ (excluding the points A, Bᵣ, Cᵣ, and Dᵣ).

When the present refrigerant further comprises R1234yf, it preferably satisfies the following requirements. In this case, the present refrigerant has a GWP of 400 or less and a refrigerating capacity ratio of 85% or more relative to that of R410A.

### Requirements

When the mass% of R32 is represented by x, the mass% of HFO-1132(E) is represented by y, the total mass% of R1234ze and R1234yf is represented by z, and the mass% of HFO-1132a is represented by a, provided that 1.5≤a≤10.0, based on the sum of R32, HFO-1132(E), R1234ze, R1234yf, and HFO-1132a, and r = R1234yf/(R1234ze+R1234yf),
if 1.5≤a≤4.6, coordinates (x,y,z) in a ternary composition diagram having R32 as a first vertex, HFO-1132(E) as a second vertex, and the sum of R1234ze and R1234yf as a third vertex are within the range of a figure surrounded by straight lines ABᵣ', Bᵣ'Cᵣ, CᵣDᵣ, DᵣO, and OA that connect the following 5 points:
   point A' (74.0, -a+26.0, 0.0),
   point Bᵣ' ((-0.043a²+0.3269a-0.5935)r²+(-
   0.0188a²+0.018a+0.3153)r+(0.0202a²-0.0907a+58.991), 0.0, -ax+100.0),
   point Cᵣ ((0.0349a²+0.1094a-1.2427)r²+(-0.0202a²+0.0907a-10.591)r+(0.0255a²-2.3816a+59.715), 0.0, -a-x+100.0),
   point Dᵣ (0.0, (-0.2097a²+1.3435a-2.7435)r²+(0.2312a²-1.507a-5.0597)r+(0.0255a²-3.3816a+76.215), -a-y+100.0), and
   point O (0.0, 100.0-a, 0.0),
   or on the straight lines ABᵣ' and CᵣDᵣ (excluding the points A, Bᵣ', Cᵣ, and Dᵣ); or
if 4.6≤a≤10.0, coordinates (x,y,z) in the ternary composition diagram are within the range of a figure surrounded by straight lines ABᵣ', Bᵣ'Cᵣ, CᵣDᵣ, DᵣO, and OA that connect the following 5 points:
   point A (74.0, -a+26.0, 0.0),
   point Bᵣ' ((-0.0077a²+0.1312a-0.4401)r+(0.0013a²-0.0223a+59.075), 0.0, -a-x+100.0),
   point Cᵣ ((0.0494a²-0.5728a+1.5901)r₂+(-0.037a2+0.763a-13.326)r+(0.0062a²-2.2383a+59.465), 0.0, -a-x+100.0),
   point Dᵣ (0.0, (-0.0648a²+1.1685a-5.0037)r²+(0.0849a²-1.2762a-3.0253)r+(0.0262a²-3.346a+76.036), -a-y+100.0), and point O (0.0, 100.0-a, 0.0),
   or on the straight lines ABᵣ' and CᵣDᵣ (excluding the points A, Bᵣ', Cᵣ, and Dᵣ).

The present refrigerant may further comprise other additional refrigerants in addition to R32, HFO-1132(E), R1234ze, R1234yf, and HFO-1132a, as long as the above properties and effects are not impaired. In this respect, in an embodiment, the present refrigerant preferably comprises R32, HFO-1132(E), R1234ze, and HFO-1132a in a total amount of 99.5 mass% or more, more preferably 99.75 mass% or more, and even more preferably 99.9 mass% or more, based on the entire refrigerant. Further, the present refrigerant may consist of R32, HFO-1132(E), R1234ze, and HFO-1132a. In this case, the present refrigerant may contain impurities inevitably mixed in the production process. In another embodiment, the present refrigerant preferably comprises R32, HFO-1132(E), R1234ze, R1234yf, and HFO-1132a in a total amount of 99.5 mass% or more, more preferably 99.75 mass% or more, and even more preferably 99.9 mass% or more, based on the entire refrigerant. Further, the present refrigerant may essentially consist of R32, HFO-1132(E), R1234ze, R1234yf, and HFO-1132a. In this case, the present refrigerant may contain impurities inevitably mixed in the production process.

Such additional refrigerants are not limited, and can be selected from a wide range of refrigerants. The mixed refrigerant may comprise a single additional refrigerant, or two or more additional refrigerants.

### 1.2. Use

The present refrigerant can be preferably used as a working fluid in a refrigerating machine.

The present composition is suitable for use as an alternative refrigerant for R410A.

### 2. Refrigerant Composition

The present refrigerant composition comprises at least the present refrigerant, and can be used for the same use as the present refrigerant. Moreover, the present refrigerant composition can be further mixed with at least a refrigeration oil to thereby obtain a working fluid for a refrigerating machine.

The present refrigerant composition further comprises at least one other component in addition to the present refrigerant. The present refrigerant composition may comprise at least one of the following other components, if necessary. As described above, when the present refrigerant composition is used as a working fluid in a refrigerating machine, it is generally used as a mixture with at least a refrigeration oil. Therefore, it is preferable that the present refrigerant composition does not substantially comprise a refrigeration oil. Specifically, in the present refrigerant composition, the content of the refrigeration oil based on the entire refrigerant composition is preferably 0-1 mass%, and more preferably 0-0.1 mass%.

### 2.1. Water

The present refrigerant composition may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the present refrigerant composition at a detectable concentration such that when the refrigerant composition has been diluted, contaminated, or undergone other changes, the tracer can trace the changes.

The present refrigerant composition may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃Cl)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The present refrigerant composition may contain the tracer in a total amount of 10-1000 parts per million by weight (ppm), preferably 30-500 ppm, and more preferably 50-300 ppm, based on the entire refrigerant composition.

### 2.3. Ultraviolet Fluorescent Dye

The present refrigerant composition may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The present refrigerant composition may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01-5 mass%, and more preferably 0.05-2 mass%, based on the entire refrigerant.

### 2.5. Polymerization Inhibitor

The present refrigerant composition may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01-5 mass%, and more preferably 0.05-2 mass%, based on the entire refrigerant.

### 3. Refrigeration Oil-Containing Working Fluid

The present refrigeration oil-containing working fluid comprises at least the present refrigerant or the present refrigerant composition and a refrigeration oil, for use as a working fluid in a refrigerating machine. Specifically, the present refrigeration oil-containing working fluid is obtained by mixing a refrigeration oil used in a compressor of a refrigerating machine with the refrigerant or the refrigerant composition. The refrigeration oil-containing working fluid generally comprises 10-50 mass% of refrigeration oil.

### 3.1. Refrigeration Oil

The present composition may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from polyalkylene glycols (PAG), polyol esters (POE), and polyvinyl ethers (PVE).

The refrigeration oil may further contain additives in addition to the base oil. The additive may be at least one member selected from antioxidants, extreme-pressure agents, acid scavengers, oxygen scavengers, copper deactivators, rust inhibitors, oil agents, and antifoaming agents.

A refrigeration oil with a kinematic viscosity of (5-400) x 10⁻⁶ m²/s (5-400 cSt) at 40°C is preferable from the standpoint of lubrication.

The present refrigeration oil-containing working fluid may further optionally contain at least one additive. Examples of additives include compatibilizing agents described below.

### 3.2. Compatibilizing Agent

The present refrigeration oil-containing working fluid may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according ("the present method") is a method for operating a refrigerating machine using the present refrigerant.

Specifically, the present method comprises the step of circulating the present refrigerant in a refrigerating machine.

### Examples

The present disclosure is described in more detail below with reference to Examples.

Mixed refrigerants were prepared by mixing R32, HFO-1132(E), R1234ze, and HFO-1132a at mass% shown in Table 1 based on their sum.

The GWP of R410A (R32 = 50%/R125 = 50%) and the above mixed refrigerants was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO 2015/141678). The refrigerating capacity of R410A and the above mixed refrigerants was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

For each of these mixed refrigerants, the COP ratio and refrigerating capacity ratio relative to those of R410A were determined. The calculation conditions were as follows:
Evaporating temperature: 5°C
Condensation temperature: 45°C
Superheating temperature: 5 K
Subcooling temperature: 5 K
Compressor efficiency: 70%

Table1 shows these values together with the GWP of each mixed refrigerant. The COP and refrigerating capacity are ratios relative to R410A.

The coefficient of performance (COP) was determined by the following formula. 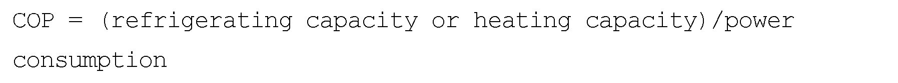 COP = (refrigerating capacity or heating capacity)/power consumption

**Table 1**

| Item | Unit | Com Ex.1 | Com Ex.2 | Com Ex.3 | Ex.1 | Ex.2 | Ex.3 | Ex.4 | Ex.5 | Com Ex.4 | Com Ex.5 |
|---|---|---|---|---|---|---|---|---|---|---|---|
| HFO-1132a | mass% | R410A | 0.0 | 0.75 | 1.5 | 3.0 | 5.0 | 7.5 | 10.0 | 12.5 | 15.0 |
| R32 | mass% | | 25.0 | 25.0 | 25.0 | 25.0 | 25.0 | 25.0 | 25.0 | 25.0 | 25.0 |
| HFO-1132 (E) | mass% | | 35.0 | 35.0 | 35.0 | 35.0 | 35.0 | 35.0 | 35.0 | 35.0 | 35.0 |
| R1234ze | mass% | | 40.0 | 39.25 | 38.5 | 37.0 | 35.0 | 32.5 | 30.0 | 27.5 | 25.0 |
| GWP | - | 2088 | 172 | 171 | 171 | 171 | 171 | 171 | 171 | 171 | 171 |
| COP ratio | % (relative to R410A) | 100.0 | 102.1 | 101.6 | 101.2 | 100.4 | 99.3 | 98.1 | 96.8 | 95.6 | 94.4 |
| Refrigerating capacity ratio | % (relative to R410A) | 100.0 | 82.9 | 84.2 | 85.5 | 88.1 | 91.4 | 95.5 | 99.5 | 103.3 | 107.0 |
| Condensation glide | °C | 0 | 7.1 | 7.6 | 8.0 | 8.7 | 9.4 | 9.9 | 10.2 | 10.2 | 9.9 |

| Item | Unit | Com Ex.6 | Com Ex.7 | Com Ex.8 | Com Ex.9 | Com Ex.10 | Com Ex.11 | Com Ex.12 | Com Ex.13 | Com Ex.14 | Com Ex.15 | Com Ex.16 | Com Ex.17 | Com Ex.18 |
|---|---|---|---|---|---|---|---|---|---|---|---|---|---|---|
| | | A | B | A' | B' | C | C' | D | A | B | A' | B' | C | D |
| HFO-1132a | mass% | 1.5 | 1.5 | 1.5 | 1.5 | 1.5 | 1.5 | 1.5 | 3.0 | 3.0 | 3.0 | 3.0 | 3.0 | 3.0 |
| R32 | mass% | 74.0 | 73.9 | 59.2 | 58.9 | 56.2 | 28.1 | 0.0 | 74.0 | 73.9 | 59.2 | 58.9 | 52.8 | 0.0 |
| HFO-1132 (E) | mass% | 24.5 | 0.0 | 39.3 | 0.0 | 0.0 | 30.3 | 71.2 | 23.0 | 0.0 | 37.8 | 0.0 | 0.0 | 66.3 |
| R1234ze | mass% | 0.0 | 24.6 | 0.0 | 39.6 | 42.3 | 40.1 | 27.3 | 0.0 | 23.1 | 0.0 | 38.1 | 44.2 | 30.7 |
| GWP | - | 500 | 500 | 400 | 400 | 382 | 192 | 2 | 500 | 500 | 400 | 400 | 359 | 3 |
| COP ratio | % (relative to R410A) | 100.1 | 102.9 | 99.1 | 103.5 | 103.6 | 101.5 | 100.0 | 99.7 | 102.3 | 98.6 | 102.8 | 103.2 | 99.3 |
| Refrigerating capacity ratio | % (relative to R410A) | 114.0 | 97.0 | 114.1 | 86.9 | 85.0 | 85.0 | 85.0 | 115.3 | 99.3 | 115.5 | 89.3 | 85.0 | 85.0 |
| Condensation glide | °C | 0.7 | 3.6 | 0.6 | 6.3 | 6.9 | 8.2 | 5.4 | 1.1 | 4.1 | 1.0 | 6.9 | 8.2 | 7.5 |

| Item | Unit | Com Ex.19 | Com Ex.20 | Com Ex.21 | Com Ex.22 | Com Ex.23 | Com Ex.24 | Com Ex.25 | Com Ex.26 | Com Ex.27 | Com Ex.28 | Com Ex.2 | Com Ex.29 |
|---|---|---|---|---|---|---|---|---|---|---|---|---|---|
| | | A | B | A' | B' | C | D | A | B | A' | B' | C | D |
| HFO-1132a | mass% | 4.6 | 4.6 | 4.6 | 4.6 | 4.6 | 4.6 | 7.0 | 7.0 | 7.0 | 7.0 | 7.0 | 7.0 |
| R32 | mass% | 74.0 | 73.9 | 59.2 | 59.0 | 49.3 | 0.0 | 74.0 | 73.9 | 59.2 | 59.0 | 44.1 | 0.0 |
| HFO-1132 (E) | mass% | 21.4 | 0.0 | 36.2 | 0.0 | 0.0 | 61.2 | 19.0 | 0.0 | 338 | 0.0 | 0.0 | 53.9 |
| R1234ze | mass% | 0.0 | 21.5 | 0.0 | 36.4 | 46.1 | 34.2 | 0.0 | 19.1 | 0.0 | 34.0 | 48.9 | 39.1 |
| GWP | | 500 | 500 | 400 | 400 | 336 | 3 | 500 | 500 | 400 | 400 | 301 | 3 |
| COP ratio | % (relative to R410A) | 99.3 | 101.8 | 98.1 | 102.2 | 102.7 | 98.7 | 98.7 | 101.0 | 97.4 | 101.4 | 102.1 | 98.0 |
| Refrigerating capacity ratio | % (relative to R410A) | 116.6 | 101.8 | 116.9 | 91.8 | 85.0 | 85.0 | 118.6 | 105.4 | 119.0 | 95.5 | 85.0 | 85.0 |
| Condensation glide | °C | 1.6 | 4.5 | 1.5 | 7.4 | 9.7 | 9.6 | 2.2 | 4.9 | 2.1 | 8.0 | 11.9 | 12.6 |

| Item | Unit | Com Ex.36 | Com Ex.37 | Com Ex.38 | Com Ex.39 | Com Ex.4C | Com Ex.41 |
|---|---|---|---|---|---|---|---|
| | | A | B | A' | B' | C | D |
| HFO-1132a | mass% | 10.0 | 10.0 | 10.0 | 10.0 | 10.0 | 10.0 |
| R32 | mass% | 74.0 | 73.9 | 59.2 | 59.0 | 37.7 | 0.0 |
| HFO-1132 (E) | mass% | 16.0 | 0.0 | 30.8 | 0.0 | 0.0 | 45.2 |
| R1234ze | mass% | 0.0 | 16.1 | 0.0 | 31.0 | 52.3 | 44.8 |
| GWP | - | 500 | 500 | 400 | 400 | 258 | 3 |
| COP ratio | % (relative to R410A) | 98.0 | 100.1 | 96.5 | 100.4 | 101.5 | 97.4 |
| Refrigerating capacity ratio | % (relative to R410A) | 120.9 | 109.7 | 121.5 | 100.1 | 85.0 | 85.0 |
| Condensation glide | °C | 2.8 | 5.3 | 2.7 | 8.4 | 14.5 | 16.1 |

Approximate expressions indicating the coordinates of each point were obtained by determining approximate expressions for the curves connecting five points, as shown in Table 2.

**Table 2**

| Item | Unit | Approximate expression calculation of point A | | | | |
|---|---|---|---|---|---|---|
| a=HFO-1132a | mass% | 1.5 | 3.0 | 4.6 | 7.0 | 10.0 |
| x=R32 | mass% | 74.0 | 74.0 | 74.0 | 74.0 | 74.0 |
| y=HFO-1132 (E) | mass% | 24.5 | 23.0 | 21.4 | 19.0 | 16.0 |
| z=R1234ze | mass% | 0.0 | 0.0 | 0.0 | 0.0 | 0.0 |
| Approximate expression of x | | 74.0 | | | | |
| Approximate expression of y | | -a+26.0 | | | | |
| Approximate expression of z | | 0.0 | | | | |

| Item | Unit | Approximate expression calculation of point B | | | | |
|---|---|---|---|---|---|---|
| a=HFO-1132a | mass% | 1.5 | 3.0 | 4.6 | 7.0 | 10.0 |
| x=R32 | mass% | 73.9 | 73.9 | 73.9 | 73.9 | 73.9 |
| y=HFO-1132 (E) | mass% | 0.0 | 0.0 | 0.0 | 0.0 | 0.0 |
| z=R1234ze | mass% | 24.6 | 23.1 | 21.5 | 19.1 | 16.1 |
| Approximate expression of x | | 73.9 | | | | |
| Approximate expression of y | | 0.0 | | | | |
| Approximate expression of z | | -a+26.1 | | | | |

| Item | Unit | Approximate expression calculation of point A' | | | | |
|---|---|---|---|---|---|---|
| a=HFO-1132a | mass% | 1.5 | 3.0 | 4.6 | 7.0 | 10.0 |
| x=R32 | mass% | 59.2 | 59.2 | 59.2 | 59.2 | 59.2 |
| y=HFO-1132 (E) | mass% | 39.3 | 37.8 | 36.2 | 33.8 | 30.8 |
| z=R1234ze | mass% | 0.0 | 0.0 | 0.0 | 0.0 | 0.0 |
| Approximate expression of x | | 59.2 | | | | |
| Approximate expression of y | | -a+40.8 | | | | |
| Approximate expression of z | | 0.0 | | | | |

| Item | Unit | Approximate expression calculation of point B' | | | | |
|---|---|---|---|---|---|---|
| a=HFO-1132a | mass% | 1.5 | 3.0 | 4.6 | 7.0 | 10.0 |
| x=R32 | mass% | 58.9 | 58.9 | 59.0 | 59.0 | 59.0 |
| y=HFO-1132 (E) | mass% | 0.0 | 0.0 | 0.0 | 0.0 | 0.0 |
| z=R1234ze | mass% | 39.6 | 38.1 | 36.4 | 34.0 | 31.0 |
| Approximate expression of x | | 0.0132a+58.891 | | | | |
| Approximate expression of y | | 0.0 | | | | |
| Approximate expression of z | | -1.0132a+41.109 | | | | |

| Item | Unit | Approximate expression calculation of point C | | | | |
|---|---|---|---|---|---|---|
| a=HFO-1132a | mass% | 1.5 | 3.0 | 4.6 | 7.0 | 10.0 |
| x=R32 | mass% | 56.2 | 52.8 | 49.3 | 44.1 | 37.7 |
| y=HFO-1132 (E) | mass% | 0.0 | 0.0 | 0.0 | 0.0 | 0.0 |
| z=R1234ze | mass% | 42.3 | 44.2 | 46.1 | 48.9 | 52.3 |
| Approximate expression of x | | 0.0087a²-2.2743a+59.574 | | | | |
| Approximate expression of y | | 0.0 | | | | |
| Approximate expression of z | | -0.0087a²+1.2743a+40.426 | | | | |

| Item | Unit | Approximate expression calculation of point D | | | | |
|---|---|---|---|---|---|---|
| a=HFO-1132a | mass% | 1.5 | 3.0 | 4.6 | 7.0 | 10.0 |
| x=R32 | mass% | 0.0 | 0.0 | 0.0 | 0.0 | 0.0 |
| y=HFO-1132 (E) | mass% | 71.2 | 66.3 | 61.2 | 53.9 | 45.2 |
| z=R1234ze | mass% | 27.3 | 30.7 | 34.2 | 39.1 | 44.8 |
| Approximate expression of x | | 0.0 | | | | |
| Approximate expression of y | | 0.0299a²-3.4018a+76.233 | | | | |
| Approximate expression of z | | =D41 | | | | |

These results demonstrate that the mixed refrigerants of R32, HFO-1132(E), R1234ze, and HFO-1132a have a GWP of 500 or less and a refrigerating capacity ratio of 85% or more relative to that of R410A when they satisfy the following requirements.

### Requirements

When the mass% of R32, HFO-1132(E), R1234ze, and HFO-1132a based on their sum is respectively represented by x, y, z, and a, provided that 1.5≤a≤10.0, coordinates (x,y,z) in a ternary composition diagram in which the sum of R32, HFO-1132(E), and R1234ze is (100-a) mass% are within the range of a figure surrounded by straight lines AB, BC, CD, DO, and OA that connect the following 5 points:
point A (74.0, -a+26.0, 0.0),
point B (73.9, 0.0, -a+26.1),
point C (0.0087a²-2.2743a+59.574, 0.0, -0.0087a²+1.2743a+40.426),
point D (0.0, 0.0299a²-3.4018a+76.233, -0.0299a²+2.4018a+23.767), and
point O (0.0, 100.0-a, 0.0),
or on the straight lines AB and CD (excluding the points A, B, C, and D).

Further, these results demonstrate that the mixed refrigerants of R32, HFO-1132(E), R1234ze, and HFO-1132a have a GWP of 400 or less and a refrigerating capacity ratio of 85% or more relative to that of R410A when they satisfy the following requirements.

### Requirements

When the mass% of R32, HFO-1132(E), R1234ze, and HFO-1132a based on their sum is respectively represented by x, y, z, and a, provided that 1.5≤a≤10.0, coordinates (x,y,z) in a ternary composition diagram in which the sum of R32, HFO-1132(E), and R1234ze is (100-a) mass% are within the range of a figure surrounded by straight lines A'B', B'C, CD, DO, and OA' that connect the following 5 points:
point A' (59.2, -a+40.8, 0.0),
point B' (0.0132a+58.891, 0.0, -1.0132a+41.109),
point C (0.0087a²-2.2743a+59.574, 0.0, -0.0087a²+1.2743a+40.426),
point D (0.0, 0.0299a²-3.4018a+76.233, -0.0299a²+2.4018a+23.767), and
point O (0.0, 100.0-a, 0.0),
or on the straight lines A'B' and CD (excluding the points A', B', C, and D).

Mixed refrigerants further comprising R1234yf in addition to R32, HFO-1132(E), R1234ze, and HFO-1132a were evaluated in the same manner as described above. Table 3 shows the results.

**Table 3**

| Item | Unit | Com Ex.42 | Com Ex.43 | Com Ex.44 | Com Ex.45 | Com Ex.46 | Com Ex.47 | Com Ex.48 | Com Ex.49 |
|---|---|---|---|---|---|---|---|---|---|
| | | B_{r=0.5} | B'_{r=0.5} | C_{r=0.5} | D_{r=0.5} | B_{r=1.0} | B'_{r=1.0} | C_{r=1.0} | D_{r=1.0} |
| HFO-1132a | mass% | 1.5 | 1.5 | 1.5 | 1.5 | 1.5 | 1.5 | 1.5 | 1.5 |
| R32 | mass% | 73.9 | 59.0 | 50.7 | 0.0 | 73.9 | 59.0 | 44.7 | 0.0 |
| HFO-1132 (E) | mass% | 0.0 | 0.0 | 0.0 | 67.5 | 0.0 | 0.0 | 0.0 | 63.2 |
| R1234(yf+ze) | mass% | 12.3 | 19.8 | 23.9 | 15.5 | 24.6 | 39.5 | 53.8 | 35.3 |
| GWP | - | 500 | 400 | 345 | 2 | 500 | 400 | 304 | 2 |
| COP ratio | % (relative to R410A) | 102.4 | 102.6 | 102.8 | 99.7 | 101.9 | 101.8 | 101.7 | 99.3 |
| Refrigerating capacity ratio | % (relative to R410A) | 99.2 | 90.5 | 85.0 | 85.0 | 101.3 | 93.7 | 85.0 | 85.0 |
| Condensation glide | °C | 2.5 | 4.3 | 5.5 | 4.6 | 1.5 | 2.5 | 4.0 | 3.6 |

| Item | Unit | Com Ex.50 | Com Ex.51 | Com Ex.52 | Com Ex.53 | Com Ex.54 | Com Ex.55 | Com Ex.56 | Com Ex.57 |
|---|---|---|---|---|---|---|---|---|---|
| | | B_{r=0.5} | B'_{r=0.5} | C_{r=0.5} | D_{r=0.5} | B_{r=1.0} | B'_{r=1.0} | C_{r=1.0} | D_{r=1.0} |
| HFO-1132e | mass% | 3.0 | 3.0 | 3.0 | 3.0 | 3.0 | 3.0 | 3.0 | 3.0 |
| R32 | mass% | 73.9 | 59.0 | 47.4 | 0.0 | 73.9 | 59.1 | 41.7 | 0.0 |
| HFO-1132 (E) | mass% | 0.0 | 0.0 | 0.0 | 62.4 | 0.0 | 0.0 | 0.0 | 58.2 |
| R1234(yf+ze) | mass% | 11.6 | 19.0 | 24.8 | 17.3 | 23.9 | 0.0 | 55.3 | 38.8 |
| GWP | **-** | 500 | 400 | 322 | 2 | 500 | 400 | 284 | 2 |
| COP ratio | % (relative to R410A) | 101.9 | 102.1 | 102.3 | 99.1 | 101.3 | 101.1 | 101.3 | 98.7 |
| Refrigerating capacity ratio | % (relative to R410A) | 101.4 | 92.6 | 85.0 | 85.0 | 109.5 | 114.2 | 85.0 | 85.0 |
| Condensation glide | °C | 3.0 | 4.8 | 6.6 | 6.4 | 0.4 | 1.6 | 5.0 | 5.1 |

| Item | Unit | Com Ex.58 | Com Ex.59 | Com Ex.60 | Com Ex.61 | Com Ex.62 | Com Ex.63 | Com Ex.54 | Com Ex.65 |
|---|---|---|---|---|---|---|---|---|---|
| | | B_{r=0.5} | B'_{r=0.5} | C_{r=0.5} | D_{r=0.5} | B_{r=1.0} | B'_{r=1.0} | C_{r=1.0} | D_{r=1.0} |
| HFO-1132a | mass% | 4.6 | 4.6 | 4.6 | 4.6 | 4.6 | 4.6 | 4.6 | 4.6 |
| R32 | mass% | 73.9 | 59.0 | 44.0 | 0.0 | 73.9 | 59.0 | 38.7 | 0.0 |
| HFO-1132 (E) | mass% | 0.0 | 0.0 | 0.0 | 57.4 | 0.0 | 0.0 | 0.0 | 53.1 |
| R1234(yf+ze) | mass% | 10.8 | 18.2 | 25.7 | 19.0 | 21.5 | 0.0 | 56.7 | 42.3 |
| GWP | **-** | 500 | 400 | 300 | 3 | 500 | 400 | 264 | 2 |
| COP ratio | % (relative to R410A) | 101.4 | 101.5 | 101.9 | 98.5 | 101.0 | 102.2 | 100.8 | 98.1 |
| Refrigerating capacity ratio | % (relative to R410A) | 103.6 | 94.9 | 85.0 | 85.0 | 105.3 | 91.8 | 85.0 | 85.0 |
| Condensation glide | °C | 3.4 | 5.3 | 7.8 | 8.1 | 2.4 | 7.4 | 5.9 | 6.6 |

| Item | Unit | Com Ex.66 | Com Ex.67 | Com Ex.68 | Com Ex.69 | Com Ex.70 | Com Ex.71 | Com Ex.72 | Com Ex.73 |
|---|---|---|---|---|---|---|---|---|---|
| | | B_{r=0.5} | B'_{r=0.5} | C_{r=0.5} | D_{r=0.5} | B_{r=1.0} | B'_{r=1.0} | C_{r=1.0} | D_{r=1.0} |
| HFO-1132a | mass% | 7.0 | 7.0 | 7.0 | 7.0 | 7.0 | 7.0 | 7.0 | 7.0 |
| R32 | mass% | 73.9 | 59.0 | 39.2 | 0.0 | 73.9 | 59.1 | 34.3 | 0.0 |
| HFO-1132 (E) | mass% | 0.0 | 0.0 | 0.0 | 50.0 | 0.0 | 0.0 | 0.0 | 46.1 |
| R1234(yf+ze) | mass% | 9.6 | 17.0 | 26.9 | 21.5 | 19.1 | 0.0 | 58.7 | 46.9 |
| GWP | **-** | 500 | 400 | 267 | 3 | 500 | 400 | 234 | 2 |
| COP ratio | % (relative to R410A) | 100.7 | 100.8 | 101.3 | 97.8 | 100.3 | 99.5 | 100.3 | 97.5 |
| Refrigerating capacity ratio | % (relative to R410A) | 106.9 | 98.4 | 85.0 | 85.0 | 108.4 | 119.3 | 85.0 | 85.0 |
| Condensation glide | °C | 3.9 | 5.9 | 9.6 | 10.6 | 3.0 | 3.0 | 7.4 | 8.7 |

| Item | Unit | Com Ex.74 | Com Ex.75 | Com Ex.76 | Com Ex.77 | Com Ex.78 | Com Ex.79 | Com Ex.80 | Com Ex.81 |
|---|---|---|---|---|---|---|---|---|---|
| | | B_{r=0.5} | B'_{r=0.5} | C_{r=0.5} | D_{r=0.5} | B_{r=1.0} | B'_{r=1.0} | C_{r=1.0} | D_{r=1.0} |
| HFO-1132a | mass% | 10.0 | 10.0 | 10.0 | 10.0 | 10.0 | 10.0 | 10.0 | 10.0 |
| R32 | mass% | 73.9 | 59.0 | 33.2 | 0.0 | 73.9 | 59.1 | 29.1 | 0.0 |
| HFO-1132 (E) | mass% | 0.0 | 0.0 | 0.0 | 41.6 | 0.0 | 0.0 | 0.0 | 38.1 |
| R1234(yf+ze) | mass% | 8.1 | 15.5 | 28.4 | 24.2 | 16.1 | 0.0 | 60.9 | 51.9 |
| GWP | - | 500 | 400 | 227 | 3 | 500 | 400 | 199 | 3 |
| COP ratio | % (relative to R410A) | 99.8 | 99.8 | 100.6 | 97.3 | 99.5 | 98.4 | 99.7 | 97.1 |
| Refrigerating capacity ratio | % (relative to R410A) | 111.0 | 102.5 | 85.0 | 85.0 | 112.2 | 122.5 | 85.0 | 85.0 |
| Condensation glide | °C | 4.4 | 6.4 | 11.7 | 13.3 | 3.6 | 3.7 | 9.1 | 10.9 |

Approximate expressions indicating the coordinates of each point were obtained by determining approximate expressions for the curves connecting three points, as shown in Tables 4 and 5.

**Table 4**

| Point Br | | | | | | | | | | | | |
|---|---|---|---|---|---|---|---|---|---|---|---|---|
| Item | | | Unit | Bᵣ (r=R1234ze/(R1234ze+R1234yf)) | | | | | | | | |
| | | | | 0.0 | 0.5 | 1.0 | 0.0 | 0.5 | 1.0 | 0.0 | 0.5 | 1.0 |
| Specific coordinates | HFO-1132a | | mass% | 1.5 | 1.5 | 1.5 | 3.0 | 3.0 | 3.0 | 4.6 | 4.6 | 4.6 |
| | R32 | | mass% | 73.9 | 73.9 | 73.9 | 73.9 | 73.9 | 73.9 | 73.9 | 73.9 | 73.9 |
| | HFO-1132E | | mass% | 0.0 | 0.0 | 0.0 | 0.0 | 0.0 | 0.0 | 0.0 | 0.0 | 0.0 |
| | R1234(ze+yf) | | mass% | 24.6 | 24.6 | 24.6 | 23.1 | 23.1 | 23.1 | 21.5 | 21.5 | 21.5 |
| r approximate expression | x-R32 approximate expression | | | 73.9 | | | 73.9 | | | 73.9 | | |
| | y=HFO-1132E approximate expression | | | 0.0 | | | 0.0 | | | 0.0 | | |
| | z-R1234(ze+yf) approximate expression | | | 24.6 | | | 23.1 | | | 21.5 | | |
| x, y, z approximate expressions represented by a and r | x | a-HFO-1132a | | 1.5 | | | 3.0 | | | 4.6 | | |
| | | Quadratic coefficient | | 0 | | | 0 | | | 0 | | |
| | | Linear coefficient | | 0 | | | 0 | | | 0 | | |
| | | Zero coefficient | | 24.6 | | | 23.1 | | | 21.5 | | |
| | x approximate expression | | | 73.9 | | | | | | | | |
| | y approximate expression | | | 0.0 | | | | | | | | |
| | z approximate expression | | | -x+26.1 | | | | | | | | |

| Point B'ᵣ | | | | | | | | | | | | |
|---|---|---|---|---|---|---|---|---|---|---|---|---|
| Item | | | Unit | B', (r-R1234ze/(R1234ze+R1234yf)) | | | | | | | | |
| | | | | 0.0 | 0.5 | 1.0 | 0.0 | 0.5 | 1.0 | 0.0 | 0.5 | 1.0 |
| Specific coordinates | HFO-1132a | | mass% | 1.5 | 1.5 | 1.5 | 3.0 | 3.0 | 3.0 | 4.6 | 4.6 | 4.6 |
| | R32 | | mass% | 58.9 | 59.0 | 59.0 | 58.9 | 59.0 | 59.1 | 59.0 | 59.0 | 59.0 |
| | HFO-1132E | | mass% | 0.0 | 0.0 | 0.0 | 0.0 | 0.0 | 0.0 | 0.0 | 0.0 | 0.0 |
| | R1234(ze+yf) | | mass% | 39.6 | 39.5 | 39.5 | 38.1 | 39.0 | 37.9 | 36.4 | 36.4 | 36.4 |
| r approximate expression | x-R32 approximate expression | | | -0.2r²+0.3r+58.9 | | | 0.2r+58.9 | | | 59.0 | | |
| | y=HFO-1132E approximate expression | | | 0.0 | | | 0.0 | | | 0.0 | | |
| | z-R1234(ze+yf) approximate expression | | | 100-a-x | | | 100-a-x | | | 36.4 | | |
| x, y, z approximate expressions represented by a and r | y | a-HFO-1132a | | 1.5 | | | 3.0 | | | 4.6 | | |
| | | Quadratic coefficient | | -0.2 | | | 0 | | | 0 | | |
| | | Linear coefficient | | 0.3 | | | 0.2 | | | 0 | | |
| | | Zero coefficient | | 58.9 | | | 58.9 | | | 59 | | |
| | x approximate expression | | | (-0.043a²+0.3269a-0.5935)r²+(-0.0188a²+0.018a+0.3153)r +(0.0202a²-0.0907a+58.991) | | | | | | | | |
| | y approximate expression | | | 0.0 | | | | | | | | |
| | z approximate expression | | | 100-a-x | | | | | | | | |

**Table 5**

| Point Cᵣ | | | | | | | | | | | | |
|---|---|---|---|---|---|---|---|---|---|---|---|---|
| Item | | | Unit | Cᵣ (r-R1234ze/(R1234ze+R1234yf)) | | | | | | | | |
| | | | | 0.0 | 0.5 | 1.0 | 0.0 | 0.5 | 1.0 | 0.0 | 0.5 | 1.0 |
| Specific coordinates | HFO-1132a | | mass% | 1.5 | 1.5 | 1.5 | 3.0 | 3.0 | 3.0 | 4.6 | 4.6 | 4.6 |
| | R32 | | mass% | 56.2 | 50.7 | 44.7 | 52.8 | 47.4 | 41.7 | 49.3 | 44.0 | 38.7 |
| | HFO-1132E | | mass% | 0.0 | 0.0 | 0.0 | 0.0 | 0.0 | 0.0 | 0.0 | 0.0 | 0.0 |
| | R1234(ze+yf) | | mass% | 42.3 | 47.8 | 53.8 | 44.2 | 49.6 | 55.3 | 46.1 | 51.4 | 56.7 |
| r approximate expression | x-R32 approximate expression | | | -r²-10.5r+56.2 | | | -0.6r²-10.5r+52.8 | | | -10.6r+49.3 | | |
| | y=HFO-1132E approximate expression | | | 0.0 | | | 0.0 | | | 0.0 | | |
| | z-R1234(ze+yf) approximate expression | | | 100-a-x | | | 100-a-x | | | 100-a-x | | |
| x, y, z approximate expressions represented by a and r | x | a-HFO-1132a | | 1.5 | | | 3.0 | | | 4.6 | | |
| | | Quadratic coefficient | | -1 | | | -0.6 | | | 0 | | |
| | | Linear coeficient | | -10.5 | | | -10.5 | | | -10.6 | | |
| | | Zero coefficient | | 56.2 | | | 52.8 | | | 49.3 | | |
| | x approximate expression | | | (0.0349a²+0.1094a-1.2427)r²+(-0.0202a²+0.0907a-10.591)r +(0.0255a²-2.3816a+59.715) | | | | | | | | |
| | y approximate expression | | | 0.0 | | | | | | | | |
| | z approximate expression | | | 100-a-x | | | | | | | | |

| Point Dᵣ | | | | | | | | | | | | |
|---|---|---|---|---|---|---|---|---|---|---|---|---|
| Item | | | Unit | Dᵣ (r-R1234ze/(R1234ze+R1234yf)) | | | | | | | | |
| | | | | 0.0 | 0.5 | 1.0 | 0.0 | 0.5 | 1.0 | 0.0 | 0.5 | 1.0 |
| Specific coordinates | HFO-1132a | | mass% | 1.5 | 1.5 | 1.5 | 3.0 | 3.0 | 3.0 | 4.6 | 4.6 | 4.6 |
| | R32 | | mass% | 0.0 | 0.0 | 0.0 | 0.0 | 0.0 | 0.0 | 0.0 | 0.0 | 0.0 |
| | HFO-1132E | | mass% | 71.2 | 67.5 | 63.2 | 66.3 | 62.4 | 58.2 | 61.2 | 57.4 | 53.1 |
| | R1234(ze+yf) | | mass% | 27.3 | 31.0 | 35.3 | 30.7 | 34.6 | 38.8 | 34.2 | 38.0 | 42.3 |
| r approximate expression | x-R32 approximate expression | | | 0.0 | | | 0.0 | | | 0.0 | | |
| | y=HFO-1132E approximate expression | | | -1.2r²-6.8r+71.2 | | | -0.6r²-7.5r+66.3 | | | -r²-7.1r+61.2 | | |
| | z-R1234(ze+yf) approximate expression | | | 100-a-y | | | 100-a-y | | | 100-a-y | | |
| x, y, z approximate expressions represented by a and r | y | a-HFO-1132a | | 1.5 | | | 3.0 | | | 4.6 | | |
| | | Quadratic coefficient | | -1.2 | | | -0.6 | | | -1 | | |
| | | Linear coefficient | | -6.8 | | | -7.5 | | | -7.1 | | |
| | | Zero coefficient | | 71.2 | | | 66.3 | | | 61.2 | | |
| | x approximate expression | | | 0.0 | | | | | | | | |
| | y approximate expression | | | (-0.2097a²+1.3435a-2.7435)r²+(0.2312a²-1.5072-5.0597)r +(0.0255a²-3.3816a+76.215) | | | | | | | | |
| | z approximate expression | | | 100-a-y | | | | | | | | |

**Table 6**

| Point Br | | | | | | | | | | | | |
|---|---|---|---|---|---|---|---|---|---|---|---|---|
| Item | | | Unit | Bᵣ (r-R1234ze/(R1234ze+R1234yf)) | | | | | | | | |
| | | | | 0.0 | 0.5 | 1.0 | 0.0 | 0.5 | 1.0 | 0.0 | 0.5 | 1.0 |
| Specific coordinates | HFO-1132a | | mass% | 4.6 | 4.6 | 4.6 | 7.0 | 7.0 | 7.0 | 10.0 | 10.0 | 10.0 |
| | R32 | | mass% | 73.9 | 73.9 | 73.9 | 73.9 | 73.9 | 73.9 | 73.9 | 73.9 | 73.9 |
| | HFO-1132E | | mass% | 0.0 | 0.0 | 0.0 | 0.0 | 0.0 | 0.0 | 0.0 | 0.0 | 0.0 |
| | R1234(ze+yf) | | mass% | 21.5 | 21.5 | 21.5 | 19.1 | 19.1 | 19.1 | 16.1 | 16.1 | 16.1 |
| r approximate expression | x-R32 approximate expression | | | 73.9 | | | 73.9 | | | 73.9 | | |
| | y=HFO-1132E approximate expression | | | 0.0 | | | 0.0 | | | 0.0 | | |
| | z=R1234(ze+yf) approximate expression | | | 21.5 | | | 19.1 | | | 16.1 | | |
| x, y, z approximate expressions represented by a and r | x | a-HFO-1132a | | 4.6 | | | 7.0 | | | 10.0 | | |
| | | Quadratic coefficient | | 0 | | | 0 | | | 0 | | |
| | | Linear coefficient | | 0 | | | 0 | | | 0 | | |
| | | Zero coefficient | | 21.5 | | | 19.1 | | | 16.1 | | |
| | x approximate expression | | | 73.9 | | | | | | | | |
| | y approximate expression | | | 0.0 | | | | | | | | |
| | z approximate expression | | | -x+26.1 | | | | | | | | |

| Point B'r | | | | | | | | | | | | |
|---|---|---|---|---|---|---|---|---|---|---|---|---|
| Item | | | Unit | B', (r-R1234ze/(R1234ze+R1234yf)) | | | | | | | | |
| | | | | 0.0 | 0.5 | 1.0 | 0.0 | 0.5 | 1.0 | 0.0 | 0.5 | 1.0 |
| Specific coordinates | HFO-1132a | | mass% | 4.6 | 4.6 | 4.6 | 7.0 | 7.0 | 7.0 | 10.0 | 10.0 | 10.0 |
| | R32 | | mass% | 59.0 | 59.0 | 59.0 | 59.0 | 59.0 | 59.1 | 59.0 | 59.0 | 59.1 |
| | HFO-1132E | | mass% | 0.0 | 0.0 | 0.0 | 0.0 | 0.0 | 0.0 | 0.0 | 0.0 | 0.0 |
| | R1234(ze+yf) | | mass% | 36.4 | 36.4 | 36.4 | 34.0 | 34.0 | 33.9 | 31.0 | 31.0 | 30.9 |
| r approximate expression | x-R32 approximate expression | | | 59.0 | | | 0.1r+58.983 | | | 0.1r+58.983 | | |
| | y=HFO-1132E approximate expression | | | 0.0 | | | 0.0 | | | 0.0 | | |
| | z=R1234(ze+yf) approximate expression | | | 36.4 | | | 100-a-x | | | 36.4 | | |
| x, y, z approximate expressions represented by a and r | x | a-HFO-1132a | | 4.6 | | | 7.0 | | | 10.0 | | |
| | | Quadratic coefficient | | 0 | | | 0 | | | 0 | | |
| | | Linear coefficient | | 0 | | | 0.1 | | | 0.1 | | |
| | | Zero coefficient | | 59 | | | 58.983 | | | 58.983 | | |
| | x approximate expression | | | (-0.0077a²+0.1312a-0.4401)r+(0.0013a²-0.0223a+59.075) | | | | | | | | |
| | y approximate expression | | | 0.0 | | | | | | | | |
| | z approximate expression | | | 100-a-x | | | | | | | | |

**Table 7**

| Point Cr | | | | | | | | | | | | |
|---|---|---|---|---|---|---|---|---|---|---|---|---|
| Item | | | Unit | Cᵣ (r-R1234ze/(R1234ze+R1234yf)) | | | | | | | | |
| | | | | 0.0 | 0.5 | 1.0 | 0.0 | 0.5 | 1.0 | 0.0 | 0.5 | 1.0 |
| Specific coordinates | HFO-1132a | | mass% | 4.6 | 4.6 | 4.6 | 7.0 | 7.0 | 7.0 | 10.0 | 10.0 | 10.0 |
| | R32 | | mass% | 49.3 | 44.0 | 38.7 | 44.1 | 39.2 | 34.3 | 37.7 | 33.2 | 29.1 |
| | HFO-1132E | | mass% | 0.0 | 0.0 | 0.0 | 0.0 | 0.0 | 0.0 | 0.0 | 0.0 | 0.0 |
| | R1234(ze+yf) | | mass% | 46.1 | 51.4 | 56.7 | 48.9 | 53.8 | 58.7 | 52.3 | 56.8 | 60.9 |
| r approximate expression | x-R32 approximate expression | | | -10.6r+49.3 | | | -9.8r+44.1 | | | 0.8r²-9.4r+37.7 | | |
| | y=HFO-1132E approximate expression | | | 0.0 | | | 0.0 | | | 0.0 | | |
| | z=R1234(ze+yf) approximate expression | | | 100-a-x | | | 100-a-x | | | 100-a-x | | |
| x, y, z approximate expressions represented by a and r | x | a-HFO-1132a | | 4.6 | | | 7.0 | | | 10.0 | | |
| | | Quadratic coefficient | | 0 | | | 0 | | | 0.8 | | |
| | | Linear coefficient | | -10.6 | | | -9.8 | | | -9.4 | | |
| | | Zero coefficient | | 49.3 | | | 44.1 | | | 37.7 | | |
| | x approximate expression | | | (0.0494a²-0.5728a+1.5901)r²+(-0.037a²+0.763a-13.326)r +(0.0062a²-2.2383a+59.465) | | | | | | | | |
| | y approximate expression | | | 0.0 | | | | | | | | |
| | z approximate expression | | | 100-a-x | | | | | | | | |

| Point Dr | | | | | | | | | | | | |
|---|---|---|---|---|---|---|---|---|---|---|---|---|
| Item | | | Unit | Dᵣ (r-R1234ze/(R1234ze+R1234yf)) | | | | | | | | |
| | | | | 0.0 | 0.5 | 1.0 | 0.0 | 0.5 | 1.0 | 0.0 | 0.5 | 1.0 |
| Specific coordinates | HFO-1132a | | mass% | 4.6 | 4.6 | 4.6 | 7.0 | 7.0 | 7.0 | 10.0 | 10.0 | 10.0 |
| | R32 | | mass% | 0.0 | 0.0 | 0.0 | 0.0 | 0.0 | 0.0 | 0.0 | 0.0 | 0.0 |
| | HFO-1132E | | mass% | 61.2 | 57.4 | 53.1 | 53.9 | 50.0 | 46.1 | 45.2 | 41.6 | 38.1 |
| | R1234(ze+yf) | | mass% | 34.2 | 38.0 | 42.3 | 39.1 | 43.0 | 46.9 | 44.8 | 48.4 | 51.9 |
| r approximate expression | x-R32 approximate expression | | | 0.0 | | | 0.0 | | | 0.0 | | |
| | y=HFO-1132E approximate expression | | | -r²-7.1r+61.2 | | | -7.8r+53.9 | | | 0.2r²-7.3r+45.2 | | |
| | z=R1234(ze+yf) approximate expression | | | 100-a-y | | | 100-a-y | | | 100-a-y | | |
| x, y, z approximate expressions represented by a and r | x | a-HFO-1132a | | 4.6 | | | 7.0 | | | 10.0 | | |
| | | Quadratic coefficient | | -1 | | | 0 | | | 0.2 | | |
| | | Linear coefficient | | -7.1 | | | -7.8 | | | -7.3 | | |
| | | Zero coefficient | | 61.2 | | | 53.9 | | | 45.2 | | |
| | x approximate expression | | | 0.0 | | | | | | | | |
| | y approximate expression | | | (-0.0648a²+1.1685a-5.0037)r²+(0.0849a²-1.2762a-3.0253)r +(0.0262a²-3.346a+76.036) | | | | | | | | |
| | z approximate expression | | | 100-a-y | | | | | | | | |

The mixed refrigerants further comprising R1234yf in addition to R32, HFO-1132(E), R1234ze, and HFO-1132a have a GWP of 500 or less and a refrigerating capacity ratio of 85% or more relative to that of R410A, because they satisfy the following requirements.

### Requirements

When the mass% of R32 is represented by x, the mass% of HFO-1132(E) is represented by y, the total mass% of R1234ze and R1234yf is represented by z, and the mass% of HFO-1132a is represented by a, provided that 1.5≤a≤10.0, based on the sum of R32, HFO-1132(E), R1234ze, R1234yf, and HFO-1132a, and r = R1234yf/(R1234ze+R1234yf),
if 1.5≤a≤4.6, coordinates (x,y,z) in a ternary composition diagram having R32 as a first vertex, HFO-1132(E) as a second vertex, and the sum of R1234ze and R1234yf as a third vertex are within the range of a figure surrounded by straight lines ABᵣ, BᵣCᵣ, CᵣDᵣ, DᵣO, and OA that connect the following 5 points:
   point A (74.0, -a+26.0, 0.0),
   point Bᵣ (73.9, 0.0, -a+26.1),
   point Cᵣ ((0.0349a²+0.1094a-1.2427)r²+(-0.0202a²+0.0907a-10.591)r+(0.0255a²-2.3816a+59.715), 0.0, -a-x+100.0),
   point Dᵣ (0.0, (-0.2097a²+1.3435a-2.7435)r²+ (0.2312a²-1.507a-5.0597)r+(0.0255a²-3.3816a+76.215), -a-y+100.0), and
   point O (0.0, 100.0-a, 0.0),
   or on the straight lines ABᵣ and CᵣDᵣ (excluding the points A, Bᵣ, Cᵣ, and Dᵣ); or
if 4.6≤a≤10.0, coordinates (x,y,z) in the ternary composition diagram are within the range of a figure surrounded by straight lines ABᵣ, BᵣCᵣ, CᵣDᵣ, DᵣO, and OA that connect the following 5 points:
   point A (74.0, -a+26.0, 0.0),
   point Bᵣ (73.9, 0.0, -a+26.1),
   point Cᵣ ((0.0494a²-0.5728a+1.5901)r₂+(-0.037a2+0.763a-13.326)r+(0.0062a²-2.2383a+59.465), 0.0, -a-x+100.0),
   point Dᵣ (0.0, (-0.0648a²+1.1685a-5.0037)r²+(0.0849a²-1.2762a-3.0253)r+(0.0262a²-3.346a+76.036), -a-y+100.0), and
   point O (0.0, 100.0-a, 0.0),
   or on the straight lines ABᵣ and CᵣDᵣ (excluding the points A, Bᵣ, Cᵣ, and Dᵣ).

The mixed refrigerants further comprising R1234yf in addition to R32, HFO-1132(E), R1234ze, and HFO-1132a have a GWP of 400 or less and a refrigerating capacity ratio of 85% or more relative to that of R410A, because they satisfy the following requirements.

### Requirements

When the mass% of R32 is represented by x, the mass% of HFO-1132(E) is represented by y, the total mass% of R1234ze and R1234yf is represented by z, and the mass% of HFO-1132a is represented by a, provided that 1.5≤a≤10.0, based on the sum of R32, HFO-1132(E), R1234ze, R1234yf, and HFO-1132a, and r = R1234yf/(R1234ze+R1234yf),
if 1.5≤a≤4.6, coordinates (x,y,z) in a ternary composition diagram having R32 as a first vertex, HFO-1132(E) as a second vertex, and the sum of R1234ze and R1234yf as a third vertex are within the range of a figure surrounded by straight lines ABᵣ', Bᵣ'Cᵣ, CᵣDᵣ, DᵣO, and OA that connect the following 5 points:
   point A' (74.0, -a+26.0, 0.0),
   point Bᵣ' ((-0.043a²+0.3269a-0.5935)r²+(-
   0.0188a²+0.018a+0.3153)r+(0.0202a²-0.0907a+58.991), 0.0, -ax+100.0),
   point Cᵣ ((0.0349a²+0.1094a-1.2427)r²+(-0.0202a²+0.0907a-10.591)r+(0.0255a²-2.3816a+59.715), 0.0, -a-x+100.0),
   point Dᵣ (0.0, (-0.2097a²+1.3435a-2.7435)r²+(0.2312a²-1.507a-5.0597)r+(0.0255a²-3.3816a+76.215), -a-y+100.0), and
   point O (0.0, 100.0-a, 0.0),
   or on the straight lines ABᵣ' and CᵣDᵣ (excluding the points A, Bᵣ', Cᵣ, and Dᵣ); or
if 4.6≤a≤10.0, coordinates (x,y,z) in the ternary composition diagram are within the range of a figure surrounded by straight lines ABᵣ', Bᵣ'Cᵣ, CᵣDᵣ, DᵣO, and OA that connect the following 5 points:
   point A (74.0, -a+26.0, 0.0),
   point Bᵣ' ((-0.0077a²+0.1312a-0.4401)r+(0.0013a²-0.0223a+59.075), 0.0, -a-x+100.0),
   point Cᵣ ((0.0494a²-0.5728a+1.5901)r₂+(-0.037a2+0.763a-13.326)r+(0.0062a²-2.2383a+59.465), 0.0, -a-x+100.0),
   point Dᵣ (0.0, (-0.0648a²+1.1685a-5.0037)r²+(0.0849a²-1.2762a-3.0253)r+(0.0262a²-3.346a+76.036), -a-y+100.0), and
   point O (0.0, 100.0-a, 0.0),
   or on the straight lines ABᵣ' and CᵣDᵣ (excluding the points A, Bᵣ', Cᵣ, and Dᵣ).

Further, the mixed refrigerants shown in the following tables were also evaluated, and the above effects were confirmed.

**Table 8**

| Item | Unit | Com Ex.83 | Ex.6 | Ex.7 | Com Ex.84 | Ex.8 | Ex.9 | Ex.10 | Com Ex.85 | Ex.11 |
|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 |
| R32 | mass% | 10.0 | 10.0 | 10.0 | 20.0 | 20.0 | 20.0 | 20.0 | 30.0 | 30.0 |
| HFO-1132 (E) | mass% | 50.0 | 70.0 | 80.0 | 40.0 | 50.0 | 60.0 | 70.0 | 20.0 | 40.0 |
| R1234(yf+ze) (r=0) | mass% | 38.5 | 18.5 | 8.5 | 38.5 | 28.5 | 18.5 | 8.5 | 48.5 | 28.5 |
| GWP | - | 70 | 69 | 69 | 138 | 137 | 137 | 136 | 206 | 205 |
| COP ratio | % (relative to R410A) | 100.9 | 99.1 | 98.5 | 101.1 | 99.9 | 99.0 | 98.3 | 102.9 | 100.2 |
| Refrigerating capacity ratio | % (relative to R410A) | 81.9 | 93.8 | 99.6 | 84.5 | 90.7 | 96.8 | 102.7 | 79.7 | 92.8 |
| Condensation glide | °C | 7.9 | 4.2 | 2.5 | 8.0 | 6.0 | 4.1 | 2.4 | 9.7 | 5.9 |

| Item | Unit | Ex.12 | Ex.13 | Com Ex.86 | Ex.14 | Ex.15 | Ex.16 | Ex.17 | Ex.18 |
|---|---|---|---|---|---|---|---|---|---|
| HFO-1132a | mass% | 1.5 | 1.5 | 1.5 | 1.5 | 1.5 | 1.5 | 1.5 | 1.5 |
| R32 | mass% | 30.0 | 30.0 | 40.0 | 40.0 | 40.0 | 40.0 | 50.0 | 50.0 |
| HFO-1132 (E) | mass% | 50.0 | 60.0 | 10.0 | 30.0 | 40.0 | 50.0 | 10.0 | 20.0 |
| R1234(yf+ze) (r=0) | mass% | 18.5 | 8.5 | 48.5 | 28.5 | 18.5 | 8.5 | 38.5 | 28.5 |
| GWP | **-** | 204 | 204 | 273 | 272 | 272 | 271 | 340 | 339 |
| COP ratio | % (relative to R410A) | 99.2 | 98.4 | 103.4 | 100.7 | 99.6 | 98.7 | 102.6 | 101.3 |
| Refrigerating capacity ratio | % (relative to R410A) | 99.0 | 105.1 | 80.5 | 94.2 | 100.7 | 107.0 | 87.9 | 94.9 |
| Condensation glide | °C | 3.9 | 2.2 | 9.1 | 5.6 | 3.8 | 2.0 | 6.9 | 5.3 |

| Item | Unit | Ex.19 | Ex.20 | Ex.21 | Ex.22 | Ex.23 | Ex.24 | Ex.25 | Com Ex.87 |
|---|---|---|---|---|---|---|---|---|---|
| HFO-1132a | mass% | 1.5 | 1.5 | 1.5 | 1.5 | 1.5 | 1.5 | 1.5 | 1.5 |
| R32 | mass% | 50.0 | 50.0 | 60.0 | 60.0 | 60.0 | 70.0 | 70.0 | 80.0 |
| HFO-1132 (E) | mass% | 30.0 | 40.0 | 10.0 | 20.0 | 30.0 | 10.0 | 20.0 | 10.0 |
| R1234(yf+ze) (r=0) | mass% | 18.5 | 8.5 | 28.5 | 18.5 | 8.5 | 18.5 | 8.5 | 8.5 |
| GWP | - | 339 | 338 | 407 | 406 | 406 | 474 | 473 | 541 |
| COP ratio | % (relative to R410A) | 100.2 | 99.3 | 102.1 | 101.0 | 99.9 | 101.8 | 100.7 | 101.5 |
| Refrigerating capacity ratio | % (relative to R410A) | 101.7 | 108.2 | 95.0 | 102.0 | 108.7 | 101.8 | 108.6 | 107.9 |
| Condensation glide | °C | 3.6 | 1.9 | 4.9 | 3.4 | 1.8 | 3.1 | 1.8 | 1.7 |

| Item | Unit | Com Ex.88 | Ex.26 | Ex.27 | Com Ex.89 | Ex.28 | Ex.29 | Ex.30 | Com Ex.90 | Ex.31 |
|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 |
| R32 | mass% | 10.0 | 10.0 | 10.0 | 20.0 | 20.0 | 20.0 | 20.0 | 30.0 | 30.0 |
| HFO-1132 (E) | mass% | 50.0 | 70.0 | 80.0 | 30.0 | 50.0 | 60.0 | 70.0 | 20.0 | 40.0 |
| R1234(yf+ze) (r=0.25) | mass% | 38.5 | 18.5 | 8.5 | 48.5 | 28.5 | 18.5 | 8.5 | 48.5 | 28.5 |
| GWP | - | 70 | 69 | 69 | 138 | 137 | 137 | 136 | 205 | 204 |
| COP ratio | % (relative to R410A) | 100.4 | 98.9 | 98.5 | 101.7 | 99.6 | 98.8 | 98.3 | 102.1 | 99.8 |
| Refrigerating capacity ratio | % (relative to R410A) | 83.3 | 94.5 | 99.9 | 79.9 | 91.8 | 97.5 | 103.0 | 81.5 | 94.0 |
| Condensation glide | °C | 6.9 | 3.7 | 2.3 | 8.7 | 5.2 | 3.6 | 2.2 | 8.4 | 5.1 |

| Item | Unit | Ex.32 | Ex.33 | Com Ex.91 | Ex.34 | Ex.35 | Ex.36 | Ex.37 | Ex.38 | Ex.39 |
|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 |
| R32 | mass% | 30.0 | 30.0 | 40.0 | 40.0 | 40.0 | 40.0 | 40.0 | 50.0 | 50.0 |
| HFO-1132 (E) | mass% | 50.0 | 60.0 | 10.0 | 20.0 | 30.0 | 40.0 | 50.0 | 10.0 | 20.0 |
| R1234(yf+ze) (r=0.25) | mass% | 18.5 | 8.5 | 48.5 | 38.5 | 28.5 | 18.5 | 8.5 | 38.5 | 28.5 |
| GWP | - | 204 | 204 | 273 | 272 | 272 | 271 | 271 | 340 | 339 |
| COP ratio | % (relative to R410A) | 99.0 | 98.3 | 102.7 | 101.4 | 100.3 | 99.4 | 98.7 | 102.2 | 101.0 |
| Refrigerating capacity ratio | % (relative to R410A) | 99.9 | 105.5 | 82.4 | 89.1 | 95.4 | 101.5 | 107.4 | 89.6 | 96.2 |
| Condensation glide | °C | 3.4 | 1.9 | 7.7 | 6.4 | 4.8 | 3.3 | 1.8 | 5.8 | 4.5 |

| Item | Unit | Ex.40 | Ex.41 | Ex.42 | Ex.43 | Ex.44 | Ex.45 | Ex.46 | Com Ex.92 |
|---|---|---|---|---|---|---|---|---|---|
| HFO-1132a | mass% | 1.5 | 1.5 | 1.5 | 1.5 | 1.5 | 1.5 | 1.5 | 1.5 |
| R32 | mass% | 50.0 | 50.0 | 60.0 | 60.0 | 60.0 | 70.0 | 70.0 | 80.0 |
| HFO-1132 (E) | mass% | 30.0 | 40.0 | 10.0 | 20.0 | 30.0 | 10.0 | 20.0 | 10.0 |
| R1234(yf+ze) (r=0.25) | mass% | 18.5 | 8.5 | 28.5 | 18.5 | 8.5 | 18.5 | 8.5 | 8.5 |
| GWP | - | 339 | 338 | 407 | 406 | 406 | 474 | 473 | 541 |
| COP ratio | % (relative to R410A) | 100.0 | 99.2 | 101.8 | 100.8 | 99.8 | 101.6 | 100.6 | 101.4 |
| Refrigerating capacity ratio | % (relative to R410A) | 102.5 | 108.5 | 96.3 | 102.9 | 109.1 | 102.6 | 109.0 | 108.3 |
| Condensation glide | °C | 3.1 | 1.7 | 4.1 | 2.9 | 1.6 | 2.7 | 1.6 | 1.5 |

**Table 9**

| Item | Unit | Com Ex.93 | Ex.47 | Ex.48 | Ex.49 | Com Ex.94 | Ex.50 | Ex.51 | Ex.52 | Com Ex.95 | Ex.53 |
|---|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 | 1.5 |
| R32 | mass% | 10.0 | 10.0 | 10.0 | 10.0 | 20.0 | 20.0 | 20.0 | 20.0 | 30.0 | 30.0 |
| HFO-1132 (E) | mass% | 40.0 | 60.0 | 70.0 | 80.0 | 30.0 | 50.0 | 60.0 | 70.0 | 20.0 | 30.0 |
| R1234(yf+ze) (r=0.5) | mass% | 48.5 | 28.5 | 18.5 | 8.5 | 48.5 | 28.5 | 18.5 | 8.5 | 48.5 | 38.5 |
| GWP | - | 70 | 70 | 69 | 69 | 138 | 137 | 137 | 136 | 205 | 205 |
| COP ratio | % (relative to R410A) | 100.9 | 99.3 | 98.8 | 98.4 | 101.0 | 99.2 | 98.6 | 98.2 | 101.4 | 100.4 |
| Refrigerating capacity ratio | % (relative to R410A) | 79.0 | 90.1 | 95.3 | 100.3 | 81.6 | 93.0 | 98.3 | 103.4 | 83.4 | 89.4 |
| Condensation glide | °C | 7.4 | 4.5 | 3.3 | 2.1 | 7.4 | 4.5 | 3.1 | 1.9 | 7.0 | 5.7 |

| Item | Unit | Ex.54 | Ex.55 | Ex.56 | Com Ex.96 | Ex.57 | Ex.58 | Ex.59 | Ex.60 | Ex.61 |
|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 |
| R32 | mass% | 30.0 | 30.0 | 30.0 | 40.0 | 40.0 | 40.0 | 40.0 | 40.0 | 50.0 |
| HFO-1132 (E) | mass% | 40.0 | 50.0 | 60.0 | 10.0 | 20.0 | 30.0 | 40.0 | 50.0 | 10.0 |
| R1234(yf+ze) (r=0.5) | mass% | 28.5 | 18.5 | 8.5 | 48.5 | 38.5 | 28.5 | 18.5 | 8.5 | 38.5 |
| GWP | - | 204 | 204 | 204 | 273 | 272 | 272 | 271 | 271 | 340 |
| COP ratio | % (relative to R410A) | 99.5 | 98.8 | 98.3 | 102.0 | 100.9 | 100.0 | 99.2 | 98.6 | 101.7 |
| Refrigerating capacity ratio | % (relative to R410A) | 95.2 | 100.7 | 105.9 | 84.4 | 90.7 | 96.7 | 102.4 | 107.7 | 91.3 |
| Condensation glide | °C | 4.3 | 3.0 | 1.7 | 6.4 | 5.3 | 4.0 | 2.8 | 1.6 | 4.8 |

| Item | Unit | Ex.62 | Ex.63 | Ex.64 | Ex.65 | Ex.66 | Ex.67 | Ex.68 | Ex.69 | Com Ex.97 |
|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 |
| R32 | mass% | 50.0 | 50.0 | 50.0 | 60.0 | 60.0 | 60.0 | 70.0 | 70.0 | 80.0 |
| HFO-1132 (E) | mass% | 20.0 | 30.0 | 40.0 | 10.0 | 20.0 | 30.0 | 10.0 | 20.0 | 10.0 |
| R1234(yf+ze) (r=0.5) | mass% | 28.5 | 18.5 | 8.5 | 28.5 | 18.5 | 8.5 | 18.5 | 8.5 | 8.5 |
| GWP | - | 339 | 339 | 338 | 407 | 406 | 406 | 474 | 473 | 541 |
| COP ratio | % (relative to R410A) | 100.7 | 99.8 | 99.1 | 101.6 | 100.6 | 99.8 | 101.5 | 100.5 | 101.3 |
| Refrigerating capacity ratio | % (relative to R410A) | 97.5 | 103.4 | 108.9 | 97.6 | 103.7 | 109.5 | 103.4 | 109.4 | 108.7 |
| Condensation glide | °C | 3.7 | 2.6 | 1.5 | 3.4 | 2.5 | 1.4 | 2.3 | 1.4 | 1.3 |

| Item | Unit | Com Ex.98 | Ex.70 | Ex.71 | Ex.72 | Com Ex.99 | Ex.73 | Ex.74 | Ex.75 | Com Ex.100 | Ex.76 |
|---|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 | 1.5 |
| R32 | mass% | 10.0 | 10.0 | 10.0 | 10.0 | 20.0 | 20.0 | 20.0 | 20.0 | 30.0 | 30.0 |
| HFO-1132 (E) | mass% | 40.0 | 60.0 | 70.0 | 80.0 | 30.0 | 50.0 | 60.0 | 70.0 | 15.0 | 30.0 |
| R1234(yf+ze) (r=0.75) | mass% | 48.5 | 28.5 | 18.5 | 8.5 | 48.5 | 28.5 | 18.5 | 8.5 | 53.5 | 38.5 |
| GWP | - | 70 | 69 | 69 | 69 | 137 | 137 | 136 | 136 | 205 | 205 |
| COP ratio | % (relative to R410A) | 100.2 | 99.0 | 98.6 | 98.3 | 100.4 | 98.9 | 98.4 | 98.1 | 101.3 | 99.9 |
| Refrigerating capacity ratio | % (relative to R410A) | 80.6 | 91.1 | 96.0 | 100.6 | 83.3 | 94.1 | 99.1 | 103.8 | 82.2 | 91.0 |
| Condensation glide | °C | 6.3 | 3.9 | 2.8 | 1.9 | 6.2 | 3.8 | 2.7 | 1.7 | 6.3 | 4.7 |

| Item | Unit | Ex.77 | Ex.78 | Ex.79 | Com Ex.101 | Ex.80 | Ex.81 | Ex.82 | Ex.83 | Ex.84 |
|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 |
| R32 | mass% | 30.0 | 30.0 | 30.0 | 40.0 | 40.0 | 40.0 | 40.0 | 40.0 | 50.0 |
| HFO-1132 (E) | mass% | 40.0 | 50.0 | 60.0 | 5.0 | 20.0 | 30.0 | 40.0 | 50.0 | 10.0 |
| R1234(yf+ze) (r=0.75) | mass% | 28.5 | 18.5 | 8.5 | 53.5 | 38.5 | 28.5 | 18.5 | 8.5 | 38.5 |
| GWP | - | 204 | 204 | 203 | 272 | 272 | 272 | 271 | 271 | 339 |
| COP ratio | % (relative to R410A) | 99.1 | 98.6 | 98.2 | 101.9 | 100.5 | 99.7 | 99.0 | 98.5 | 101.3 |
| Refrigerating capacity ratio | % (relative to R410A) | 96.4 | 101.5 | 106.3 | 83.1 | 92.3 | 97.9 | 103.2 | 108.1 | 92.9 |
| Condensation glide | °C | 3.5 | 2.5 | 1.5 | 5.6 | 4.3 | 3.3 | 2.3 | 1.4 | 3.8 |

| Item | Unit | Ex.85 | Ex.86 | Ex.87 | Ex.88 | Ex.89 | Ex.90 | Ex.91 | Ex.92 | Com Ex.102 |
|---|---|---|---|---|---|---|---|---|---|---|
| HFO-1132a | mass% | 1.5 | 1.5 | 1.5 | 1.5 | 1.5 | 1.5 | 1.5 | 1.5 | 1.5 |
| R32 | mass% | 50.0 | 50.0 | 50.0 | 60.0 | 60.0 | 60.0 | 70.0 | 70.0 | 80.0 |
| HFO-1132 (E) | mass% | 20.0 | 30.0 | 40.0 | 10.0 | 20.0 | 30.0 | 10.0 | 20.0 | 10.0 |
| R1234(yf+ze) (r=0.75) | mass% | 28.5 | 18.5 | 8.5 | 28.5 | 18.5 | 8.5 | 18.5 | 8.5 | 8.5 |
| GWP | - | 339 | 339 | 338 | 406 | 406 | 406 | 473 | 473 | 540 |
| COP ratio | % (relative to R410A) | 100.4 | 99.6 | 99.0 | 101.3 | 100.4 | 99.7 | 101.3 | 100.4 | 101.2 |
| Refrigerating capacity ratio | % (relative to R410A) | 98.8 | 104.2 | 109.3 | 98.9 | 104.6 | 109.9 | 104.2 | 109.7 | 109.0 |
| Condensation glide | °C | 3.0 | 2.2 | 1.3 | 2.7 | 2.0 | 1.2 | 1.8 | 1.2 | 1.2 |

**Table 10**

| Item | Unit | Com Ex.103 | Ex.93 | Ex.94 | Ex.95 | Com Ex.104 | Ex.96 | Ex.97 | Ex.98 | Com Ex.105 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 10.0 | 10.0 | 10.0 | 10.0 | 20.0 | 20.0 | 20.0 | 20.0 | 30.0 |
| HFO-1132 (E) | mass% | 45.0 | 60.0 | 70.0 | 80.0 | 35.0 | 50.0 | 60.0 | 70.0 | 20.0 |
| R1234(yf+ze) (r=0) | mass% | 42.0 | 27.0 | 17.0 | 7.0 | 42.0 | 27.0 | 17.0 | 7.0 | 47.0 |
| GWP | - | 71 | 70 | 69 | 69 | 138 | 137 | 137 | 136 | 206 |
| COP ratio | relative to R41 | 100.5 | 99.0 | 98.2 | 97.7 | 100.8 | 99.0 | 98.2 | 97.5 | 102.0 |
| Refrigerating capacity r | relative to R41 | 81.5 | 90.6 | 96.5 | 102.3 | 83.9 | 93.3 | 99.4 | 105.3 | 82.2 |
| Condensation glide | °C | 10.0 | 6.9 | 4.9 | 3.2 | 9.9 | 6.7 | 4.7 | 2.9 | 10.5 |

| Item | Unit | Ex.99 | Ex.100 | Ex.101 | Com Ex.106 | Ex.102 | Ex.103 | Ex.104 | Ex.105 | Ex.106 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 30.0 | 30.0 | 30.0 | 40.0 | 40.0 | 40.0 | 40.0 | 40.0 | 50.0 |
| HFO-1132 (E) | mass% | 40.0 | 50.0 | 60.0 | 10.0 | 20.0 | 30.0 | 40.0 | 50.0 | 10.0 |
| R1234(yf+ze) (r=0) | mass% | 27.0 | 17.0 | 7.0 | 47.0 | 37.0 | 27.0 | 17.0 | 7.0 | 37.0 |
| GWP | - | 205 | 204 | 204 | 273 | 272 | 272 | 271 | 271 | 340 |
| COP ratio | relative to R41 | 99.4 | 98.4 | 97.6 | 102.7 | 101.2 | 99.9 | 98.9 | 98.0 | 102.0 |
| Refrigerating capacity r | relative to R41 | 95.3 | 101.6 | 107.7 | 82.9 | 89.9 | 96.6 | 103.1 | 109.4 | 90.3 |
| Condensation glide | °C | 6.4 | 4.4 | 2.5 | 9.8 | 8.1 | 6.1 | 4.1 | 2.3 | 7.5 |

| Item | Unit | Ex.107 | Ex.108 | Ex.109 | Ex.110 | Ex.111 | Ex.112 | Ex.113 | Ex.114 | Com Ex.107 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 50.0 | 50.0 | 50.0 | 60.0 | 60.0 | 60.0 | 70.0 | 70.0 | 80.0 |
| HFO-1132 (E) | mass% | 20.0 | 30.0 | 40.0 | 10.0 | 20.0 | 30.0 | 10.0 | 20.0 | 10.0 |
| R1234(yf+ze) (r=0) | mass% | 27.0 | 17.0 | 7.0 | 27.0 | 17.0 | 7.0 | 17.0 | 7.0 | 7.0 |
| GWP | - | 339 | 339 | 338 | 407 | 406 | 406 | 474 | 473 | 541 |
| COP ratio | relative to R41 | 100.7 | 99.6 | 98.6 | 101.5 | 100.4 | 99.3 | 101.3 | 100.1 | 101.0 |
| Refrigerating capacity r | relative to R41 | 97.3 | 104.1 | 110.6 | 97.4 | 104.4 | 111.1 | 104.1 | 110.9 | 110.2 |
| Condensation glide | °C | 5.7 | 3.9 | 2.2 | 5.3 | 3.7 | 2.1 | 3.5 | 2.1 | 2.0 |

| Item | Unit | Com Ex.101 | Ex.115 | Ex.116 | Ex.117 | Com Ex.109 | Ex.118 | Ex.119 | Ex.120 | Ex.121 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 10.0 | 10.0 | 10.0 | 10.0 | 20.0 | 20.0 | 20.0 | 20.0 | 20.0 |
| HFO-1132 (E) | mass% | 40.0 | 60.0 | 70.0 | 80.0 | 30.0 | 40.0 | 50.0 | 60.0 | 70.0 |
| R1234(yf+ze) (r=0.25) | mass% | 47.0 | 27.0 | 17.0 | 7.0 | 47.0 | 37.0 | 27.0 | 17.0 | 7.0 |
| GWP | - | 71 | 70 | 69 | 69 | 138 | 137 | 137 | 137 | 136 |
| COP ratio | relative to R41 | 100.6 | 98.7 | 98.1 | 97.6 | 100.9 | 99.7 | 98.7 | 98.0 | 97.5 |
| Refrigerating capacity r | relative to R41 | 80.0 | 91.6 | 97.2 | 102.6 | 82.4 | 88.5 | 94.4 | 100.1 | 105.6 |
| Condensation glide | °C | 9.7 | 6.1 | 4.5 | 3.0 | 9.5 | 7.7 | 5.9 | 4.2 | 2.7 |

| Item | Unit | Com Ex.110 | Ex.122 | Ex.123 | Ex.124 | Ex.125 | Com Ex.111 | Ex.126 | Ex.127 | Ex.128 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 30.0 | 30.0 | 30.0 | 30.0 | 30.0 | 40.0 | 40.0 | 40.0 | 40.0 |
| HFO-1132 (E) | mass% | 15.0 | 30.0 | 40.0 | 50.0 | 60.0 | 5.0 | 20.0 | 30.0 | 40.0 |
| R1234(yf+ze) (r=0.25) | mass% | 52.0 | 37.0 | 27.0 | 17.0 | 7.0 | 52.0 | 37.0 | 27.0 | 17.0 |
| GWP | - | 206 | 205 | 204 | 204 | 204 | 273 | 272 | 272 | 271 |
| COP ratio | relative to R41 | 102.1 | 100.1 | 99.1 | 98.2 | 97.6 | 102.7 | 100.7 | 99.6 | 98.7 |
| Refrigerating capacity r | relative to R41 | 80.7 | 90.3 | 96.4 | 102.3 | 108.0 | 81.3 | 91.5 | 97.8 | 103.9 |
| Condensation glide | °C | 9.9 | 7.3 | 5.6 | 3.9 | 2.4 | 9.0 | 6.9 | 5.3 | 3.6 |

| Item | Unit | Ex.129 | Ex.130 | Ex.131 | Ex.132 | Ex.133 | Ex.134 | Ex.135 | Ex.136 | Ex.137 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 40.0 | 50.0 | 50.0 | 50.0 | 50.0 | 60.0 | 60.0 | 60.0 | 70.0 |
| HFO-1132 (E) | mass% | 50.0 | 10.0 | 20.0 | 30.0 | 40.0 | 10.0 | 20.0 | 30.0 | 10.0 |
| R1234(yf+ze) (r=0.25) | mass% | 7.0 | 37.0 | 27.0 | 17.0 | 7.0 | 27.0 | 17.0 | 7.0 | 17.0 |
| GWP | - | 271 | 340 | 339 | 339 | 338 | 407 | 406 | 406 | 474 |
| COP ratio | relative to R41 | 98.0 | 101.5 | 100.4 | 99.4 | 98.5 | 101.3 | 100.2 | 99.3 | 101.1 |
| Refrigerating capacity r | relative to R41 | 109.8 | 91.9 | 98.6 | 104.9 | 110.9 | 98.6 | 105.2 | 111.4 | 104.8 |
| Condensation glide | °C | 2.1 | 6.4 | 4.9 | 3.5 | 2.0 | 4.6 | 3.3 | 2.0 | 3.1 |

**Table 11**

| Item | Unit | Ex.138 | Com Ex.112 |
|---|---|---|---|
| HFO-1132a | mass% | 3.0 | 3.0 |
| R32 | mass% | 70.0 | 80.0 |
| HFO-1132 (E) | mass% | 20.0 | 10.0 |
| R1234(yf+ze) (r=0.25) | mass% | 7.0 | 7.0 |
| GWP | - | 473 | 541 |
| COP ratio | relative to R41 | 100.1 | 100.9 |
| Refrigerating capacity r | relative to R41 | 111.2 | 110.5 |
| Condensation glide | °C | 1.9 | 1.8 |

| Item | Unit | Com Ex.113 | Ex.139 | Ex.140 | Ex.141 | Ex.142 | Com Ex.114 | Ex.143 | Ex.144 | Ex.145 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 10.0 | 10.0 | 10.0 | 10.0 | 10.0 | 20.0 | 20.0 | 20.0 | 20.0 |
| HFO-1132 (E) | mass% | 40.0 | 50.0 | 60.0 | 70.0 | 80.0 | 30.0 | 50.0 | 60.0 | 70.0 |
| R1234(yf+ze) (r=0.5) | mass% | 47.0 | 37.0 | 27.0 | 17.0 | 7.0 | 47.0 | 27.0 | 17.0 | 7.0 |
| GWP | - | 70 | 70 | 69 | 69 | 69 | 138 | 137 | 136 | 136 |
| COP ratio | relative to R41 | 100.0 | 99.1 | 98.4 | 97.9 | 97.6 | 100.3 | 98.4 | 97.8 | 97.4 |
| Refrigerating capacity r | relative to R41 | 81.5 | 87.2 | 92.6 | 97.8 | 102.8 | 84.0 | 95.4 | 100.8 | 105.9 |
| Condensation glide | °C | 8.4 | 6.8 | 5.3 | 4.0 | 2.8 | 8.2 | 5.1 | 3.7 | 2.5 |

| Item | Unit | Com Ex.115 | Ex.146 | Ex.147 | Ex.148 | Ex.149 | Com Ex.116 | Ex.150 | Ex.151 | Ex.152 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 30.0 | 30.0 | 30.0 | 30.0 | 30.0 | 40.0 | 40.0 | 40.0 | 40.0 |
| HFO-1132 (E) | mass% | 15.0 | 30.0 | 40.0 | 50.0 | 60.0 | 5.0 | 20.0 | 30.0 | 40.0 |
| R1234(yf+ze) (r=0.5) | mass% | 52.0 | 37.0 | 27.0 | 17.0 | 7.0 | 52.0 | 37.0 | 27.0 | 17.0 |
| GWP | - | 205 | 205 | 204 | 204 | 203 | 273 | 272 | 272 | 271 |
| COP ratio | relative to R41 | 101.4 | 99.7 | 98.8 | 98.1 | 97.5 | 102.0 | 100.3 | 99.3 | 98.6 |
| Refrigerating capacity r | relative to R41 | 82.6 | 91.8 | 97.5 | 103.0 | 108.3 | 83.3 | 93.0 | 99.0 | 104.7 |
| Condensation glide | °C | 8.4 | 6.2 | 4.8 | 3.4 | 2.2 | 7.6 | 5.8 | 4.5 | 3.2 |

| Item | Unit | Ex.153 | Ex.154 | Ex.155 | Ex.156 | Ex.157 | Ex.158 | Ex.159 | Ex.160 | Ex.161 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 40.0 | 50.0 | 50.0 | 50.0 | 50.0 | 60.0 | 60.0 | 60.0 | 70.0 |
| HFO-1132 (E) | mass% | 50.0 | 10.0 | 20.0 | 30.0 | 40.0 | 10.0 | 20.0 | 30.0 | 10.0 |
| R1234(yf+ze) (r=0.5) | mass% | 7.0 | 37.0 | 27.0 | 17.0 | 7.0 | 27.0 | 17.0 | 7.0 | 17.0 |
| GWP | - | 271 | 339 | 339 | 339 | 338 | 406 | 406 | 406 | 473 |
| COP ratio | relative to R41 | 97.9 | 101.1 | 100.1 | 99.2 | 98.5 | 101.0 | 100.1 | 99.2 | 100.9 |
| Refrigerating capacity r | relative to R41 | 110.1 | 93.5 | 99.7 | 105.6 | 111.2 | 99.8 | 105.9 | 111.7 | 105.6 |
| Condensation glide | °C | 2.0 | 5.3 | 4.2 | 3.0 | 1.8 | 3.9 | 2.9 | 1.8 | 2.7 |

| Item | Unit | Ex.162 | Com Ex.117 |
|---|---|---|---|
| HFO-1132a | mass% | 3.0 | 3.0 |
| R32 | mass% | 70.0 | 80.0 |
| HFO-1132 (E) | mass% | 20.0 | 10.0 |
| R1234(yf+ze) (r=0.5) | mass% | 7.0 | 7.0 |
| GWP | - | 473 | 540 |
| COP ratio | relative to R41 | 100.0 | 100.8 |
| Refrigerating capacity r | relative to R41 | 111.5 | 110.8 |
| Condensation glide | °C | 1.8 | 1.7 |

**Table 12**

| Item | Unit | Com Ex.118 | Ex.163 | Ex.164 | Ex.165 | Com Ex.119 | Ex.166 | Ex.167 | Ex.168 | Ex.169 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 10.0 | 10.0 | 10.0 | 10.0 | 20.0 | 20.0 | 20.0 | 20.0 | 20.0 |
| HFO-1132 (E) | mass% | 40.0 | 60.0 | 70.0 | 80.0 | 25.0 | 40.0 | 50.0 | 60.0 | 70.0 |
| R1234(yf+ze) (r=0.75) | mass% | 47.0 | 27.0 | 17.0 | 7.0 | 52.0 | 37.0 | 27.0 | 17.0 | 7.0 |
| GWP | **-** | 70 | 69 | 69 | 69 | 138 | 137 | 137 | 136 | 136 |
| COP ratio | relative to R41 | 99.5 | 98.2 | 97.8 | 97.5 | 100.2 | 98.8 | 98.2 | 97.7 | 97.3 |
| Refrigerating capacity r | relative to R41 | 83.0 | 93.6 | 98.5 | 103.1 | 82.7 | 91.2 | 96.5 | 101.5 | 106.2 |
| Condensation glide | °C | 7.2 | 4.6 | 3.6 | 2.6 | 7.5 | 5.6 | 4.4 | 3.3 | 2.3 |

| Item | Unit | Com Ex.120 | Ex.170 | Ex.171 | Ex.172 | Ex.173 | Ex.174 | Ex.175 | Ex.176 | Ex.177 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 30.0 | 30.0 | 30.0 | 30.0 | 30.0 | 30.0 | 40.0 | 40.0 | 40.0 |
| HFO-1132 (E) | mass% | 10.0 | 20.0 | 30.0 | 40.0 | 50.0 | 60.0 | 10.0 | 20.0 | 30.0 |
| R1234(yf+ze) (r=0.75) | mass% | 57.0 | 47.0 | 37.0 | 27.0 | 17.0 | 7.0 | 47.0 | 37.0 | 27.0 |
| GWP | - | 205 | 205 | 204 | 204 | 204 | 203 | 272 | 272 | 272 |
| COP ratio | relative to R41 | 101.3 | 100.1 | 99.2 | 98.5 | 97.9 | 97.5 | 100.9 | 99.9 | 99.1 |
| Refrigerating capacity r | relative to R41 | 81.2 | 87.4 | 93.2 | 98.7 | 103.8 | 108.6 | 88.4 | 94.5 | 100.1 |
| Condensation glide | °C | 7.5 | 6.4 | 5.2 | 4.0 | 3.0 | 2.0 | 5.8 | 4.8 | 3.7 |

| Item | Unit | Ex.178 | Ex.179 | Ex.180 | Ex.181 | Ex.182 | Ex.183 | Ex.184 | Ex.185 | Ex.186 |
|---|---|---|---|---|---|---|---|---|---|---|
| HFO-1132a | mass% | 3.0 | 3.0 | 3.0 | 3.0 | 3.0 | 3.0 | 3.0 | 3.0 | 3.0 |
| R32 | mass% | 40.0 | 40.0 | 50.0 | 50.0 | 50.0 | 50.0 | 60.0 | 60.0 | 60.0 |
| HFO-1132 (E) | mass% | 40.0 | 50.0 | 10.0 | 20.0 | 30.0 | 40.0 | 10.0 | 20.0 | 30.0 |
| R1234(yf+ze) (r=0.75) | mass% | 17.0 | 7.0 | 37.0 | 27.0 | 17.0 | 7.0 | 27.0 | 17.0 | 7.0 |
| GWP | **-** | 271 | 271 | 339 | 339 | 339 | 338 | 406 | 406 | 406 |
| COP ratio | relative to R41 | 98.4 | 97.8 | 100.7 | 99.8 | 99.1 | 98.4 | 100.7 | 99.9 | 99.1 |
| Refrigerating capacity r | relative to R41 | 105.4 | 110.4 | 95.0 | 100.9 | 106.4 | 111.5 | 101.0 | 106.7 | 112.0 |
| Condensation glide | °C | 2.7 | 1.8 | 4.3 | 3.5 | 2.6 | 1.7 | 3.2 | 2.4 | 1.6 |

| Item | Unit | Ex.187 | Ex.188 | Com Ex.121 |
|---|---|---|---|---|
| HFO-1132a | mass% | 3.0 | 3.0 | 3.0 |
| R32 | mass% | 70.0 | 70.0 | 80.0 |
| HFO-1132 (E) | mass% | 10.0 | 20.0 | 10.0 |
| R1234(yf+ze) (r=0.75) | mass% | 17.0 | 7.0 | 7.0 |
| GWP | - | 473 | 473 | 540 |
| COP ratio | relative to R41 | 100.8 | 99.9 | 100.8 |
| Refrigerating capacity r | relative to R41 | 106.3 | 111.8 | 111.0 |
| Condensation glide | °C | 2.3 | 1.6 | 1.6 |

**Table 13**

| Item | Unit | Com Ex.122 | Ex.189 | Ex.190 | Ex.191 | Ex.192 | Com Ex.123 | Ex.193 | Ex.194 | Ex.195 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 10.0 | 10.0 | 10.0 | 10.0 | 10.0 | 20.0 | 20.0 | 20.0 | 20.0 |
| HFO-1132 (E) | mass% | 40.0 | 50.0 | 60.0 | 70.0 | 80.0 | 25.0 | 40.0 | 50.0 | 60.0 |
| R1234(yf+ze) (r=0) | mass% | 45.4 | 35.4 | 25.4 | 15.4 | 5.4 | 50.4 | 35.4 | 25.4 | 15.4 |
| GWP | - | 71 | 70 | 70 | 69 | 69 | 138 | 138 | 137 | 137 |
| COP ratio | relative to R41 | 100.2 | 99.0 | 98.0 | 97.3 | 96.8 | 101.4 | 99.3 | 98.2 | 97.3 |
| Refrigerating capacity r | relative to R41 | 81.3 | 87.4 | 93.5 | 99.4 | 105.1 | 80.2 | 89.8 | 96.0 | 102.1 |
| Condensation glide | °C | 12.1 | 9.8 | 7.6 | 5.5 | 3.7 | 12.9 | 9.5 | 7.2 | 5.1 |

| Item | Unit | Ex.196 | Com Ex.124 | Ex.197 | Ex.198 | Ex.199 | Ex.200 | Com Ex.125 | Ex.201 | Ex.202 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 20.0 | 30.0 | 30.0 | 30.0 | 30.0 | 30.0 | 40.0 | 40.0 | 40.0 |
| HFO-1132 (E) | mass% | 70.0 | 15.0 | 30.0 | 40.0 | 50.0 | 60.0 | 5.0 | 20.0 | 30.0 |
| R1234(yf+ze) (r=0) | mass% | 5.4 | 50.4 | 35.4 | 25.4 | 15.4 | 5.4 | 50.4 | 35.4 | 25.4 |
| GWP | - | 136 | 206 | 205 | 204 | 204 | 203 | 273 | 272 | 272 |
| COP ratio | relative to R41 | 96.7 | 102.0 | 99.8 | 98.6 | 97.6 | 96.9 | 102.7 | 100.5 | 99.2 |
| Refrigerating capacity r | relative to R41 | 108.0 | 81.5 | 91.5 | 98.0 | 104.2 | 110.3 | 81.9 | 92.5 | 99.2 |
| Condensation glide | °C | 3.3 | 12.3 | 9.0 | 6.8 | 4.7 | 2.9 | 11.3 | 8.5 | 6.5 |

| Item | Unit | Ex.203 | Ex.204 | Ex.205 | Ex.206 | Ex.207 | Ex.208 | Ex.209 | Ex.210 | Ex.211 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 40.0 | 40.0 | 50.0 | 50.0 | 50.0 | 50.0 | 60.0 | 60.0 | 60.0 |
| HFO-1132 (E) | mass% | 40.0 | 50.0 | 10.0 | 20.0 | 30.0 | 40.0 | 10.0 | 20.0 | 30.0 |
| R1234(yf+ze) (r=0) | mass% | 15.4 | 5.4 | 35.4 | 25.4 | 15.4 | 5.4 | 25.4 | 15.4 | 5.4 |
| GWP | - | 271 | 271 | 340 | 339 | 339 | 338 | 407 | 406 | 406 |
| COP ratio | relative to R41 | 98.2 | 97.3 | 101.3 | 100.0 | 98.9 | 97.9 | 100.9 | 99.8 | 98.7 |
| Refrigerating capacity r | relative to R41 | 105.8 | 112.0 | 92.9 | 99.9 | 106.6 | 113.1 | 99.9 | 106.9 | 113.5 |
| Condensation glide | °C | 4.4 | 2.6 | 7.9 | 6.1 | 4.2 | 2.4 | 5.7 | 4.0 | 2.4 |

| Item | Unit | Ex.212 | Ex.213 | Com Ex.126 |
|---|---|---|---|---|
| HFO-1132a | mass% | 4.6 | 4.6 | 4.6 |
| R32 | mass% | 70.0 | 70.0 | 80.0 |
| HFO-1132 (E) | mass% | 10.0 | 20.0 | 10.0 |
| R1234(yf+ze) (r=0) | mass% | 15.4 | 5.4 | 5.4 |
| GWP | - | 474 | 473 | 540 |
| COP ratio | relative to R41 | 100.7 | 99.5 | 100.4 |
| Refrigerating capacity r | relative to R41 | 106.5 | 113.3 | 112.6 |
| Condensation glide | °C | 3.8 | 2.4 | 2.3 |

| Item | Unit | Com Ex.127 | Ex.214 | Ex.215 | Ex.216 | Ex.217 | Com Ex.128 | Ex.218 | Ex.219 | Ex.220 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 10.0 | 10.0 | 10.0 | 10.0 | 10.0 | 20.0 | 20.0 | 20.0 | 20.0 |
| HFO-1132 (E) | mass% | 40.0 | 50.0 | 60.0 | 70.0 | 80.0 | 25.0 | 40.0 | 50.0 | 60.0 |
| R1234(yf+ze) (r=0.25) | mass% | 45.4 | 35.4 | 25.4 | 15.4 | 5.4 | 50.4 | 35.4 | 25.4 | 15.4 |
| GWP | - | 70 | 70 | 70 | 69 | 69 | 138 | 137 | 137 | 136 |
| COP ratio | relative to R41 | 99.7 | 98.6 | 97.8 | 97.2 | 96.7 | 100.8 | 98.9 | 97.9 | 97.2 |
| Refrigerating capacity r | relative to R41 | 82.7 | 88.7 | 94.4 | 100.0 | 105.3 | 81.9 | 91.1 | 97.0 | 102.7 |
| Condensation glide | °C | 10.6 | 8.6 | 6.8 | 5.1 | 3.6 | 11.2 | 8.3 | 6.4 | 4.7 |

**Table 14**

| Item | Unit | Ex.221 | Com Ex.129 | Ex.222 | Ex.223 | Ex.224 | Ex.225 | Com Ex.130 | Ex.226 | Ex.227 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 20.0 | 30.0 | 30.0 | 30.0 | 30.0 | 30.0 | 40.0 | 40.0 | 40.0 |
| HFO-1132 (E) | mass% | 70.0 | 15.0 | 30.0 | 40.0 | 50.0 | 60.0 | 5.0 | 20.0 | 30.0 |
| R1234(yf+ze) (r=0.25) | mass% | 5.4 | 50.4 | 35.4 | 25.4 | 15.4 | 5.4 | 50.4 | 35.4 | 25.4 |
| GWP | - | 136 | 205 | 205 | 204 | 204 | 203 | 273 | 272 | 272 |
| COP ratio | relative to R41 | 96.6 | 101.4 | 99.4 | 98.3 | 97.5 | 96.8 | 102.0 | 100.1 | 98.9 |
| Refrigerating capacity r | relative to R41 | 108.2 | 83.2 | 92.9 | 99.0 | 104.9 | 110.6 | 83.8 | 94.0 | 100.3 |
| Condensation glide | °C | 3.1 | 10.6 | 7.9 | 6.0 | 4.3 | 2.7 | 9.7 | 7.4 | 5.7 |

| Item | Unit | Ex.228 | Ex.229 | Ex.230 | Ex.231 | Ex.232 | Ex.233 | Ex.234 | Ex.235 | Ex.236 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 40.0 | 40.0 | 50.0 | 50.0 | 50.0 | 50.0 | 60.0 | 60.0 | 60.0 |
| HFO-1132 (E) | mass% | 40.0 | 50.0 | 10.0 | 20.0 | 30.0 | 40.0 | 10.0 | 20.0 | 30.0 |
| R1234(yf+ze) (r=0.25) | mass% | 15.4 | 5.4 | 35.4 | 25.4 | 15.4 | 5.4 | 25.4 | 15.4 | 5.4 |
| GWP | - | 271 | 271 | 340 | 339 | 339 | 338 | 407 | 406 | 406 |
| COP ratio | relative to R41 | 98.0 | 97.3 | 100.9 | 99.8 | 98.8 | 97.9 | 100.7 | 99.6 | 98.6 |
| Refrigerating capacity r | relative to R41 | 106.4 | 112.3 | 94.4 | 101.0 | 107.3 | 113.3 | 101.0 | 107.6 | 113.8 |
| Condensation glide | °C | 4.0 | 2.4 | 6.8 | 5.3 | 3.8 | 2.3 | 5.0 | 3.6 | 2.2 |

| Item | Unit | Ex.237 | Ex.238 | Com Ex.131 |
|---|---|---|---|---|
| HFO-1132a | mass% | 4.6 | 4.6 | 4.6 |
| R32 | mass% | 70.0 | 70.0 | 80.0 |
| HFO-1132 (E) | mass% | 10.0 | 20.0 | 10.0 |
| R1234(yf+ze) (r=0.25) | mass% | 15.4 | 5.4 | 5.4 |
| GWP | - | 473 | 473 | 540 |
| COP ratio | relative to R41 | 100.6 | 99.5 | 100.4 |
| Refrigerating capacity r | relative to R41 | 107.2 | 113.6 | 112.8 |
| Condensation glide | °C | 3.4 | 2.2 | 2.2 |

| Item | Unit | Com Ex.132 | Ex.239 | Ex.240 | Ex.241 | Ex.242 | Com Ex.133 | Ex.243 | Ex.244 | Ex.245 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 10.0 | 10.0 | 10.0 | 10.0 | 10.0 | 20.0 | 20.0 | 20.0 | 20.0 |
| HFO-1132 (E) | mass% | 40.0 | 50.0 | 60.0 | 70.0 | 80.0 | 25.0 | 40.0 | 50.0 | 60.0 |
| R1234(yf+ze) (r=0.5) | mass% | 45.4 | 35.4 | 25.4 | 15.4 | 5.4 | 50.4 | 35.4 | 25.4 | 15.4 |
| GWP | **-** | 70 | 70 | 69 | 69 | 69 | 138 | 137 | 137 | 136 |
| COP ratio | relative to R41 | 99.2 | 98.3 | 97.6 | 97.0 | 96.7 | 100.1 | 98.5 | 97.6 | 97.0 |
| Refrigerating capacity r | relative to R41 | 84.2 | 89.9 | 95.3 | 100.5 | 105.5 | 83.5 | 92.4 | 98.0 | 103.4 |
| Condensation glide | °C | 9.2 | 7.6 | 6.0 | 4.7 | 3.4 | 9.7 | 7.2 | 5.6 | 4.2 |

| Item | Unit | Ex.246 | Com Ex.134 | Ex.247 | Ex.248 | Ex.249 | Ex.250 | Ex.251 | Ex.252 | Ex.253 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 20.0 | 30.0 | 30.0 | 30.0 | 30.0 | 30.0 | 30.0 | 40.0 | 40.0 |
| HFO-1132 (E) | mass% | 70.0 | 10.0 | 20.0 | 30.0 | 40.0 | 50.0 | 60.0 | 10.0 | 20.0 |
| R1234(yf+ze) (r=0.5) | mass% | 5.4 | 64.4 | 45.4 | 35.4 | 25.4 | 15.4 | 5.4 | 45.4 | 35.4 |
| GWP | - | 136 | 206 | 205 | 205 | 204 | 204 | 203 | 272 | 272 |
| COP ratio | relative to R41 | 96.6 | 101.8 | 100.1 | 98.9 | 98.0 | 97.3 | 96.8 | 100.8 | 99.7 |
| Refrigerating capacity r | relative to R41 | 108.5 | 78.7 | 88.2 | 94.3 | 100.0 | 105.5 | 110.8 | 89.0 | 95.4 |
| Condensation glide | °C | 3.0 | 10.1 | 8.3 | 6.7 | 5.2 | 3.8 | 2.6 | 7.6 | 6.3 |

**Table 15**

| Item | Unit | Ex.254 | Ex.255 | Ex.256 | Ex.257 | Ex.258 | Ex.259 | Ex.260 | Ex.261 | Ex.262 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 40.0 | 40.0 | 40.0 | 50.0 | 50.0 | 50.0 | 50.0 | 60.0 | 60.0 |
| HFO-1132 (E) | mass% | 30.0 | 40.0 | 50.0 | 10.0 | 20.0 | 30.0 | 40.0 | 10.0 | 20.0 |
| R1234(yf+ze) (r=0.5) | mass% | 25.4 | 15.4 | 5.4 | 35.4 | 25.4 | 15.4 | 5.4 | 25.4 | 15.4 |
| GWP | - | 272 | 271 | 271 | 339 | 339 | 339 | 338 | 406 | 406 |
| COP ratio | relative to R41 | 98.7 | 97.9 | 97.2 | 100.6 | 99.5 | 98.6 | 97.8 | 100.5 | 99.5 |
| Refrigerating capacity r | relative to R41 | 101.4 | 107.1 | 112.5 | 95.8 | 102.1 | 108.0 | 113.6 | 102.1 | 108.3 |
| Condensation glide | °C | 4.9 | 3.5 | 2.3 | 5.8 | 4.6 | 3.4 | 2.2 | 4.3 | 3.2 |

| Item | Unit | Ex.263 | Ex.264 | Ex.265 | Com Ex.135 |
|---|---|---|---|---|---|
| HFO-1132a | mass% | 4.6 | 4.6 | 4.6 | 4.6 |
| R32 | mass% | 60.0 | 70.0 | 70.0 | 80.0 |
| HFO-1132 (E) | mass% | 30.0 | 10.0 | 20.0 | 10.0 |
| R1234(yf+ze) (r=0.5) | mass% | 5.4 | 15.4 | 5.4 | 5.4 |
| GWP | - | 406 | 473 | 473 | 540 |
| COP ratio | relative to R41 | 98.6 | 100.4 | 99.4 | 100.3 |
| Refrigerating capacity r | relative to R41 | 114.0 | 107.9 | 113.8 | 113.0 |
| Condensation glide | °C | 2.1 | 3.0 | 2.1 | 2.1 |

| Item | Unit | Com Ex.136 | Ex.266 | Ex.267 | Ex.268 | Ex.269 | Com Ex.137 | Ex.270 | Ex.271 | Ex.272 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 10.0 | 10.0 | 10.0 | 10.0 | 10.0 | 20.0 | 20.0 | 20.0 | 20.0 |
| HFO-1132 (E) | mass% | 35.0 | 50.0 | 60.0 | 70.0 | 80.0 | 20.0 | 30.0 | 40.0 | 50.0 |
| R1234(yf+ze) (r=0.75) | mass% | 50.4 | 35.4 | 25.4 | 15.4 | 5.4 | 55.4 | 45.4 | 35.4 | 25.4 |
| GWP | - | 70 | 70 | 69 | 69 | 69 | 138 | 137 | 137 | 137 |
| COP ratio | relative to R41 | 99.2 | 97.9 | 97.3 | 96.9 | 96.6 | 100.1 | 99.0 | 98.1 | 97.4 |
| Refrigerating capacity r | relative to R41 | 82.7 | 91.0 | 96.2 | 101.1 | 105.7 | 82.1 | 88.1 | 93.7 | 99.0 |
| Condensation glide | °C | 8.7 | 6.6 | 5.3 | 4.2 | 3.3 | 8.9 | 7.5 | 6.1 | 4.9 |

| Item | Unit | Ex.273 | Ex.274 | Com Ex.138 | Ex.275 | Ex.276 | Ex.277 | Ex.278 | Ex.279 | Ex.280 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 20.0 | 20.0 | 30.0 | 30.0 | 30.0 | 30.0 | 30.0 | 30.0 | 40.0 |
| HFO-1132 (E) | mass% | 60.0 | 70.0 | 10.0 | 20.0 | 30.0 | 40.0 | 50.0 | 60.0 | 10.0 |
| R1234(yf+ze) (r=0.75) | mass% | 15.4 | 5.4 | 55.4 | 45.4 | 35.4 | 25.4 | 15.4 | 5.4 | 45.4 |
| GWP | **-** | 136 | 136 | 205 | 205 | 204 | 204 | 204 | 203 | 272 |
| COP ratio | relative to R41 | 96.9 | 96.5 | 100.7 | 99.5 | 98.5 | 97.8 | 97.2 | 96.7 | 100.3 |
| Refrigerating capacity r | relative to R41 | 104.0 | 108.7 | 83.5 | 89.8 | 95.6 | 101.1 | 106.2 | 111.0 | 90.7 |
| Condensation glide | °C | 3.8 | 2.8 | 8.1 | 6.9 | 5.7 | 4.5 | 3.4 | 2.4 | 6.3 |

| Item | Unit | Ex.281 | Ex.282 | Ex.283 | Ex.284 | Ex.285 | Ex.286 | Ex.287 | Ex.288 | Ex.289 |
|---|---|---|---|---|---|---|---|---|---|---|
| HFO-1132a | mass% | 4.6 | 4.6 | 4.6 | 4.6 | 4.6 | 4.6 | 4.6 | 4.6 | 4.6 |
| R32 | mass% | 40.0 | 40.0 | 40.0 | 40.0 | 50.0 | 50.0 | 50.0 | 50.0 | 60.0 |
| HFO-1132 (E) | mass% | 20.0 | 30.0 | 40.0 | 50.0 | 10.0 | 20.0 | 30.0 | 40.0 | 10.0 |
| R1234(yf+ze) (r=0.75) | mass% | 35.4 | 25.4 | 15.4 | 5.4 | 35.4 | 25.4 | 15.4 | 5.4 | 25.4 |
| GWP | - | 272 | 271 | 271 | 271 | 339 | 339 | 339 | 338 | 406 |
| COP ratio | relative to R41 | 99.3 | 98.4 | 97.7 | 97.2 | 100.2 | 99.3 | 98.5 | 97.8 | 100.2 |
| Refrigerating capacity r | relative to R41 | 96.8 | 102.5 | 107.8 | 112.7 | 97.3 | 103.2 | 108.7 | 113.8 | 103.2 |
| Condensation glide | °C | 5.2 | 4.2 | 3.1 | 2.2 | 4.8 | 3.9 | 2.9 | 2.0 | 3.6 |

| Item | Unit | Ex.290 | Ex.291 | Ex.292 | Ex.293 | Com Ex.139 |
|---|---|---|---|---|---|---|
| HFO-1132a | mass% | 4.6 | 4.6 | 4.6 | 4.6 | 4.6 |
| R32 | mass% | 60.0 | 60.0 | 70.0 | 70.0 | 80.0 |
| HFO-1132 (E) | mass% | 20.0 | 30.0 | 10.0 | 20.0 | 10.0 |
| R1234(yf+ze) (r=0.75) | mass% | 15.4 | 5.4 | 15.4 | 5.4 | 5.4 |
| GWP | - | 406 | 406 | 473 | 473 | 540 |
| COP ratio | relative to R41 | 99.3 | 98.5 | 100.3 | 99.4 | 100.3 |
| Refrigerating capacity r | relative to R41 | 108.9 | 114.2 | 108.5 | 114.0 | 113.2 |
| Condensation glide | °C | 2.8 | 2.0 | 2.7 | 2.0 | 1.9 |

**Table 16**

| Item | Unit | Com Ex.140 | Ex.294 | Ex.295 | Ex.296 | Ex.297 | Com Ex. 141 | Ex.298 | Ex.299 | Ex.300 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 10.0 | 10.0 | 10.0 | 10.0 | 10.0 | 20.0 | 20.0 | 20.0 | 20.0 |
| HFO-1132 (E) | mass% | 30.0 | 50.0 | 60.0 | 70.0 | 80.0 | 20.0 | 30.0 | 40.0 | 50.0 |
| R1234(yf+ze) (r=0) | mass% | 53.0 | 33.0 | 23.0 | 13.0 | 3.0 | 53.0 | 43.0 | 33.0 | 23.0 |
| GWP | - | 71 | 70 | 70 | 69 | 69 | 138 | 138 | 137 | 137 |
| COP ratio | relative to R41 | 100.4 | 97.6 | 96.7 | 96.0 | 95.4 | 101.1 | 99.4 | 98.0 | 96.9 |
| Refrigerating capacity r | relative to R41 | 79.2 | 91.6 | 97.6 | 103.5 | 109.2 | 80.9 | 87.5 | 93.8 | 100.0 |
| Condensation glide | °C | 15.9 | 10.7 | 8.3 | 6.2 | 4.3 | 15.2 | 12.7 | 10.1 | 7.7 |

| Item | Unit | Ex.301 | Ex.302 | Com Ex.142 | Ex.303 | Ex.304 | Ex.305 | Ex.306 | Ex.307 | Ex.308 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 20.0 | 20.0 | 30.0 | 30.0 | 30.0 | 30.0 | 30.0 | 30.0 | 40.0 |
| HFO-1132 (E) | mass% | 60.0 | 70.0 | 10.0 | 20.0 | 30.0 | 40.0 | 50.0 | 60.0 | 10.0 |
| R1234(yf+ze) (r=0) | mass% | 13.0 | 3.0 | 53.0 | 43.0 | 33.0 | 23.0 | 13.0 | 3.0 | 43.0 |
| GWP | - | 136 | 136 | 206 | 205 | 205 | 204 | 204 | 203 | 273 |
| COP ratio | relative to R41 | 96.1 | 95.4 | 101.7 | 100.1 | 98.6 | 97.4 | 96.4 | 95.7 | 100.9 |
| Refrigerating capacity r | relative to R41 | 106.1 | 112.0 | 81.9 | 88.8 | 95.4 | 101.9 | 108.1 | 114.2 | 89.3 |
| Condensation glide | °C | 5.6 | 3.7 | 14.2 | 12.0 | 9.6 | 7.2 | 5.1 | 3.2 | 11.2 |

| Item | Unit | Ex.309 | Ex.310 | Ex.311 | Ex.312 | Ex.313 | Ex.314 | Ex.315 | Ex.316 | Ex.317 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 40.0 | 40.0 | 40.0 | 40.0 | 50.0 | 50.0 | 50.0 | 50.0 | 60.0 |
| HFO-1132 (E) | mass% | 20.0 | 30.0 | 40.0 | 50.0 | 10.0 | 20.0 | 30.0 | 40.0 | 10.0 |
| R1234(yf+ze) (r=0) | mass% | 33.0 | 23.0 | 13.0 | 3.0 | 33.0 | 23.0 | 13.0 | 3.0 | 23.0 |
| GWP | - | 272 | 272 | 271 | 271 | 340 | 339 | 339 | 338 | 407 |
| COP ratio | relative to R41 | 99.4 | 98.1 | 97.1 | 96.2 | 100.3 | 99.1 | 97.9 | 96.9 | 100.1 |
| Refrigerating capacity r | relative to R41 | 96.3 | 103.1 | 109.6 | 115.8 | 96.6 | 103.6 | 110.4 | 116.8 | 103.6 |
| Condensation glide | °C | 9.0 | 6.8 | 4.7 | 2.8 | 8.5 | 6.5 | 4.5 | 2.7 | 6.1 |

| Item | Unit | Ex.318 | Ex.319 | Ex.320 | Ex.321 | Com Ex.143 |
|---|---|---|---|---|---|---|
| HFO-1132a | mass% | 7.0 | 7.0 | 7.0 | 7.0 | 7.0 |
| R32 | mass% | 60.0 | 60.0 | 70.0 | 70.0 | 80.0 |
| HFO-1132 (E) | mass% | 20.0 | 30.0 | 10.0 | 20.0 | 10.0 |
| R1234(yf+ze) (r=0) | mass% | 13.0 | 3.0 | 13.0 | 3.0 | 3.0 |
| GWP | - | 406 | 406 | 473 | 473 | 540 |
| COP ratio | relative to R41 | 98.9 | 97.8 | 99.9 | 98.7 | 99.6 |
| Refrigerating capacity r | relative to R41 | 110.6 | 117.2 | 110.1 | 116.9 | 116.0 |
| Condensation glide | °C | 4.3 | 2.6 | 4.2 | 2.6 | 2.6 |

| Item | Unit | Com Ex.144 | Ex.322 | Ex.323 | Ex.324 | Ex.325 | Com Ex.145 | Ex.326 | Ex.327 | Ex.328 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 10.0 | 10.0 | 10.0 | 10.0 | 10.0 | 20.0 | 20.0 | 20.0 | 20.0 |
| HFO-1132 (E) | mass% | 30.0 | 50.0 | 60.0 | 70.0 | 80.0 | 20.0 | 30.0 | 40.0 | 50.0 |
| R1234(yf+ze) (r=0.25) | mass% | 53.0 | 33.0 | 23.0 | 13.0 | 3.0 | 53.0 | 43.0 | 33.0 | 23.0 |
| GWP | - | 71 | 70 | 69 | 69 | 69 | 138 | 138 | 137 | 137 |
| COP ratio | relative to R41 | 99.8 | 97.3 | 96.5 | 95.9 | 95.4 | 100.4 | 98.9 | 97.7 | 96.7 |
| Refrigerating capacity r | relative to R41 | 80.6 | 92.7 | 98.4 | 104.0 | 109.3 | 82.5 | 88.9 | 95.0 | 100.9 |
| Condensation glide | °C | 13.8 | 9.5 | 7.5 | 5.8 | 4.2 | 13.2 | 11.1 | 8.9 | 7.0 |

**Table 17**

| Item | Unit | Ex.329 | Ex.330 | Com Ex.146 | Ex.331 | Ex.332 | Ex.333 | Com Ex.130 | Ex.334 | Ex.335 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 20.0 | 20.0 | 30.0 | 30.0 | 30.0 | 30.0 | 30.0 | 30.0 | 40.0 |
| HFO-1132 (E) | mass% | 60.0 | 70.0 | 10.0 | 20.0 | 30.0 | 40.0 | 50.0 | 60.0 | 10.0 |
| R1234(yf+ze) (r=0.25) | mass% | 13.0 | 3.0 | 53.0 | 43.0 | 33.0 | 23.0 | 13.0 | 3.0 | 43.0 |
| GWP | - | 136 | 136 | 206 | 205 | 205 | 204 | 204 | 203 | 273 |
| COP ratio | relative to R41 | 95.9 | 95.4 | 101.1 | 99.6 | 98.3 | 97.2 | 96.3 | 95.7 | 100.4 |
| Refrigerating capacity r | relative to R41 | 106.6 | 112.1 | 83.6 | 90.3 | 96.7 | 102.8 | 108.7 | 114.3 | 90.9 |
| Condensation glide | °C | 5.2 | 3.6 | 12.3 | 10.4 | 8.4 | 6.5 | 4.7 | 3.1 | 9.7 |

| Item | Unit | Ex.336 | Ex.337 | Ex.338 | Ex.339 | Ex.340 | Ex.341 | Ex.342 | Ex.343 | Ex.344 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 40.0 | 40.0 | 40.0 | 40.0 | 50.0 | 50.0 | 50.0 | 50.0 | 60.0 |
| HFO-1132 (E) | mass% | 20.0 | 30.0 | 40.0 | 50.0 | 10.0 | 20.0 | 30.0 | 40.0 | 10.0 |
| R1234(yf+ze) (r=0.25) | mass% | 33.0 | 23.0 | 13.0 | 3.0 | 33.0 | 23.0 | 13.0 | 3.0 | 23.0 |
| GWP | - | 272 | 272 | 271 | 271 | 339 | 339 | 339 | 338 | 406 |
| COP ratio | relative to R41 | 99.1 | 97.9 | 97.0 | 96.2 | 100.0 | 98.8 | 97.8 | 96.9 | 99.9 |
| Refrigerating capacity r | relative to R41 | 97.6 | 104.0 | 110.1 | 115.9 | 98.0 | 104.6 | 111.0 | 116.9 | 104.6 |
| Condensation glide | °C | 7.9 | 6.1 | 4.3 | 2.7 | 7.3 | 5.7 | 4.1 | 2.6 | 5.4 |

| Item | Unit | Ex.345 | Ex.346 | Ex.347 | Ex.348 | Com Ex.147 |
|---|---|---|---|---|---|---|
| HFO-1132a | mass% | 7.0 | 7.0 | 7.0 | 7.0 | 7.0 |
| R32 | mass% | 60.0 | 60.0 | 70.0 | 70.0 | 80.0 |
| HFO-1132 (E) | mass% | 20.0 | 30.0 | 10.0 | 20.0 | 10.0 |
| R1234(yf+ze) (r=0.25) | mass% | 13.0 | 3.0 | 13.0 | 3.0 | 3.0 |
| GWP | - | 406 | 406 | 473 | 473 | 540 |
| COP ratio | relative to R41 | 98.7 | 97.7 | 99.7 | 98.6 | 99.6 |
| Refrigerating capacity r | relative to R41 | 111.1 | 117.3 | 110.7 | 117.0 | 116.1 |
| Condensation glide | °C | 4.0 | 2.5 | 3.8 | 2.6 | 2.6 |

| Item | Unit | Com Ex.141 | Ex.349 | Ex.350 | Ex.351 | Ex.352 | Ex.353 | Com Ex.149 | Ex.354 | Ex.355 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 10.0 | 10.0 | 10.0 | 10.0 | 10.0 | 10.0 | 20.0 | 20.0 | 20.0 |
| HFO-1132 (E) | mass% | 30.0 | 40.0 | 50.0 | 60.0 | 70.0 | 80.0 | 20.0 | 30.0 | 40.0 |
| R1234(yf+ze) (r=0.5) | mass% | 53.0 | 43.0 | 33.0 | 23.0 | 13.0 | 3.0 | 53.0 | 43.0 | 33.0 |
| GWP | - | 71 | 70 | 70 | 69 | 69 | 69 | 138 | 138 | 137 |
| COP ratio | relative to R41 | 99.3 | 98.0 | 97.0 | 96.3 | 95.8 | 95.4 | 99.8 | 98.4 | 97.3 |
| Refrigerating capacity r | relative to R41 | 82.1 | 88.1 | 93.8 | 99.2 | 104.4 | 109.4 | 84.1 | 90.3 | 96.2 |
| Condensation glide | °C | 12.0 | 10.2 | 8.4 | 6.8 | 5.4 | 4.1 | 11.3 | 9.6 | 7.8 |

**Table 18**

| Item | Unit | Ex.356 | Ex.357 | Ex.358 | Com Ex.150 | Ex.359 | Ex.360 | Ex.361 | Ex.362 | Ex.363 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 20.0 | 20.0 | 20.0 | 30.0 | 30.0 | 30.0 | 30.0 | 30.0 | 30.0 |
| HFO-1132 (E) | mass% | 50.0 | 60.0 | 70.0 | 5.0 | 20.0 | 30.0 | 40.0 | 50.0 | 60.0 |
| R1234(yf+ze) (r=0.5) | mass% | 23.0 | 13.0 | 3.0 | 58.0 | 43.0 | 33.0 | 23.0 | 13.0 | 3.0 |
| GWP | - | 137 | 136 | 136 | 206 | 205 | 205 | 204 | 204 | 203 |
| COP ratio | relative to R41 | 96.5 | 95.8 | 95.4 | 101.2 | 99.1 | 97.9 | 97.0 | 96.2 | 95.7 |
| Refrigerating capacity r | relative to R41 | 101.8 | 107.1 | 112.2 | 81.8 | 91.8 | 97.9 | 103.7 | 109.2 | 114.4 |
| Condensation glide | °C | 6.2 | 4.8 | 3.5 | 11.1 | 8.9 | 7.3 | 5.7 | 4.3 | 3.0 |

| Item | Unit | Ex.364 | Ex.365 | Ex.366 | Ex.367 | Ex.368 | Ex.369 | Ex.370 | Ex.371 | Ex.372 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 40.0 | 40.0 | 40.0 | 40.0 | 40.0 | 50.0 | 50.0 | 50.0 | 50.0 |
| HFO-1132 (E) | mass% | 10.0 | 20.0 | 30.0 | 40.0 | 50.0 | 10.0 | 20.0 | 30.0 | 40.0 |
| R1234(yf+ze) (r=0.5) | mass% | 43.0 | 33.0 | 23.0 | 13.0 | 3.0 | 33.0 | 23.0 | 13.0 | 3.0 |
| GWP | - | 272 | 272 | 272 | 271 | 271 | 339 | 339 | 339 | 338 |
| COP ratio | relative to R41 | 99.9 | 98.7 | 97.7 | 96.9 | 96.2 | 99.7 | 98.6 | 97.7 | 96.9 |
| Refrigerating capacity r | relative to R41 | 92.5 | 98.9 | 105.0 | 110.7 | 116.1 | 99.3 | 105.6 | 111.5 | 117.1 |
| Condensation glide | °C | 8.2 | 6.8 | 5.3 | 3.9 | 2.7 | 6.3 | 5.0 | 3.7 | 2.5 |

| Item | Unit | Ex.373 | Ex.374 | Ex.375 | Ex.376 | Ex.377 | Com Ex.151 |
|---|---|---|---|---|---|---|---|
| HFO-1132a | mass% | 7.0 | 7.0 | 7.0 | 7.0 | 7.0 | 7.0 |
| R32 | mass% | 60.0 | 60.0 | 60.0 | 70.0 | 70.0 | 80.0 |
| HFO-1132 (E) | mass% | 10.0 | 20.0 | 30.0 | 10.0 | 20.0 | 10.0 |
| R1234(yf+ze) (r=0.5) | mass% | 23.0 | 13.0 | 3.0 | 13.0 | 3.0 | 3.0 |
| GWP | - | 406 | 406 | 406 | 473 | 473 | 540 |
| COP ratio | relative to R41 | 99.6 | 98.6 | 97.7 | 99.6 | 98.6 | 99.6 |
| Refrigerating capacity r | relative to R41 | 105.6 | 111.7 | 117.4 | 111.2 | 117.1 | 116.3 |
| Condensation glide | °C | 4.7 | 3.6 | 2.5 | 3.5 | 2.5 | 2.5 |

| Item | Unit | Com Ex.152 | Ex.378 | Ex.379 | Ex.380 | Ex.381 | Ex.382 | Com Ex.153 | Ex.383 | Ex.384 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 10.0 | 10.0 | 10.0 | 10.0 | 10.0 | 10.0 | 20.0 | 20.0 | 20.0 |
| HFO-1132 (E) | mass% | 25.0 | 40.0 | 50.0 | 60.0 | 70.0 | 80.0 | 10.0 | 20.0 | 30.0 |
| R1234(yf+ze) (r=0.75) | mass% | 58.0 | 43.0 | 33.0 | 23.0 | 13.0 | 3.0 | 63.0 | 53.0 | 43.0 |
| GWP | - | 70 | 70 | 70 | 69 | 69 | 69 | 138 | 138 | 137 |
| COP ratio | relative to R41 | 99.4 | 97.6 | 96.7 | 96.1 | 95.7 | 95.4 | 100.6 | 99.2 | 97.9 |
| Refrigerating capacity r | relative to R41 | 80.4 | 89.3 | 94.8 | 100.0 | 104.9 | 109.5 | 79.2 | 85.7 | 91.7 |
| Condensation glide | °C | 11.2 | 8.8 | 7.4 | 6.1 | 5.0 | 4.1 | 11.0 | 9.7 | 8.2 |

| Item | Unit | Ex.385 | Ex.386 | Ex.387 | Ex.388 | Ex.389 | Ex.390 | Ex.391 | Ex.392 | Ex.393 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 20.0 | 20.0 | 20.0 | 20.0 | 30.0 | 30.0 | 30.0 | 30.0 | 30.0 |
| HFO-1132 (E) | mass% | 40.0 | 50.0 | 60.0 | 70.0 | 10.0 | 20.0 | 30.0 | 40.0 | 50.0 |
| R1234(yf+ze) (r=0.75) | mass% | 33.0 | 23.0 | 13.0 | 3.0 | 53.0 | 43.0 | 33.0 | 23.0 | 13.0 |
| GWP | - | 137 | 137 | 136 | 136 | 205 | 205 | 204 | 204 | 204 |
| COP ratio | relative to R41 | 97.0 | 96.3 | 95.7 | 95.4 | 99.8 | 98.6 | 97.5 | 96.7 | 96.1 |
| Refrigerating capacity r | relative to R41 | 97.3 | 102.6 | 107.6 | 112.3 | 87.0 | 93.3 | 99.1 | 104.6 | 109.7 |
| Condensation glide | °C | 6.8 | 5.5 | 4.4 | 3.4 | 8.8 | 7.5 | 6.2 | 5.0 | 3.9 |

**Table 19**

| Item | Unit | Ex.394 | Ex.395 | Ex.396 | Ex.397 | Ex.398 | Ex.399 | Ex.400 | Ex.401 | Ex.402 |
|---|---|---|---|---|---|---|---|---|---|---|
| HFO-1132a | mass% | 7.0 | 7.0 | 7.0 | 7.0 | 7.0 | 7.0 | 7.0 | 7.0 | 7.0 |
| R32 | mass% | 30.0 | 40.0 | 40.0 | 40.0 | 40.0 | 40.0 | 50.0 | 50.0 | 50.0 |
| HFO-1132 (E) | mass% | 60.0 | 10.0 | 20.0 | 30.0 | 40.0 | 50.0 | 10.0 | 20.0 | 30.0 |
| R1234(yf+ze) (r=0.75) | mass% | 3.0 | 43.0 | 33.0 | 23.0 | 13.0 | 3.0 | 33.0 | 23.0 | 13.0 |
| GWP | - | 203 | 272 | 272 | 271 | 271 | 271 | 339 | 339 | 338 |
| COP ratio | relative to R41 | 95.6 | 99.4 | 98.4 | 97.5 | 96.7 | 96.2 | 99.4 | 98.4 | 97.6 |
| Refrigerating capacity r | relative to R41 | 114.5 | 94.1 | 100.2 | 105.9 | 111.2 | 116.2 | 100.6 | 106.6 | 112.1 |
| Condensation glide | °C | 2.9 | 6.9 | 5.8 | 4.6 | 3.6 | 2.6 | 5.3 | 4.4 | 3.4 |

| Item | Unit | Ex.403 | Ex.404 | Ex.405 | Ex.406 | Ex.407 | Ex.408 | Com Ex.154 |
|---|---|---|---|---|---|---|---|---|
| HFO-1132a | mass% | 7.0 | 7.0 | 7.0 | 7.0 | 7.0 | 7.0 | 7.0 |
| R32 | mass% | 50.0 | 60.0 | 60.0 | 60.0 | 70.0 | 70.0 | 80.0 |
| HFO-1132 (E) | mass% | 40.0 | 10.0 | 20.0 | 30.0 | 10.0 | 20.0 | 10.0 |
| R1234(yf+ze) (r=0.75) | mass% | 3.0 | 23.0 | 13.0 | 3.0 | 13.0 | 3.0 | 3.0 |
| GWP | - | 338 | 406 | 406 | 406 | 473 | 473 | 540 |
| COP ratio | relative to R41 | 96.9 | 99.4 | 98.5 | 97.7 | 99.5 | 98.6 | 99.5 |
| Refrigerating capacity r | relative to R41 | 117.2 | 106.5 | 112.2 | 117.5 | 111.7 | 117.3 | 116.4 |
| Condensation glide | °C | 2.4 | 4.1 | 3.3 | 2.4 | 3.2 | 2.4 | 2.4 |

**Table 20**

| Item | Unit | Com Ex.155 | Ex.409 | Ex.410 | Ex.411 | Ex.412 | Com Ex.156 | Ex.413 | Ex.414 | Ex.415 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 10.0 | 10.0 | 10.0 | 10.0 | 10.0 | 20.0 | 20.0 | 20.0 | 20.0 |
| HFO-1132 (E) | mass% | 25.0 | 40.0 | 50.0 | 60.0 | 70.0 | 15.0 | 30.0 | 40.0 | 50.0 |
| R1234(yf+ze) (r=0) | mass% | 55.0 | 40.0 | 30.0 | 20.0 | 10.0 | 55.0 | 40.0 | 30.0 | 20.0 |
| GWP | - | 71 | 70 | 70 | 69 | 69 | 139 | 138 | 137 | 137 |
| COP ratio | relative to R41 | 99.8 | 97.3 | 96.0 | 95.0 | 94.3 | 100.6 | 98.0 | 96.5 | 95.4 |
| Refrigerating capacity r | relative to R41 | 81.1 | 90.5 | 96.6 | 102.6 | 108.4 | 82.5 | 92.3 | 98.7 | 104.9 |
| Condensation glide | °C | 18.3 | 14.0 | 11.2 | 8.8 | 6.6 | 17.3 | 13.2 | 10.5 | 8.0 |

| Item | Unit | Ex.416 | Com Ex.157 | Ex.417 | Ex.418 | Ex.419 | Ex.420 | Ex.421 | Ex.422 | Ex.423 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 20.0 | 30.0 | 30.0 | 30.0 | 30.0 | 30.0 | 30.0 | 40.0 | 40.0 |
| HFO-1132 (E) | mass% | 60.0 | 5.0 | 10.0 | 20.0 | 30.0 | 40.0 | 50.0 | 10.0 | 20.0 |
| R1234(yf+ze) (r=0) | mass% | 10.0 | 55.0 | 50.0 | 40.0 | 30.0 | 20.0 | 10.0 | 40.0 | 30.0 |
| GWP | - | 136 | 206 | 206 | 205 | 205 | 204 | 204 | 273 | 272 |
| COP ratio | relative to R41 | 94.5 | 101.4 | 100.5 | 98.8 | 97.2 | 96.0 | 95.0 | 99.7 | 98.2 |
| Refrigerating capacity r | relative to R41 | 110.9 | 83.0 | 86.6 | 93.5 | 100.1 | 106.6 | 112.8 | 94.0 | 101.0 |
| Condensation glide | °C | 5.8 | 16.1 | 15.0 | 12.5 | 9.9 | 7.4 | 5.2 | 11.7 | 9.3 |

| Item | Unit | Ex.424 | Ex.425 | Ex.426 | Ex.427 | Ex.428 | Ex.429 | Ex.430 | Ex.431 | Com Ex.158 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 40.0 | 40.0 | 50.0 | 50.0 | 50.0 | 60.0 | 60.0 | 70.0 | 80.0 |
| HFO-1132 (E) | mass% | 30.0 | 40.0 | 10.0 | 20.0 | 30.0 | 10.0 | 20.0 | 10.0 | 5.0 |
| R1234(yf+ze) (r=0) | mass% | 20.0 | 10.0 | 30.0 | 20.0 | 10.0 | 20.0 | 10.0 | 10.0 | 5.0 |
| GWP | - | 272 | 271 | 340 | 339 | 339 | 406 | 406 | 473 | 540 |
| COP ratio | relative to R41 | 96.8 | 95.8 | 99.2 | 97.9 | 96.7 | 99.0 | 97.7 | 98.8 | 99.3 |
| Refrigerating capacity r | relative to R41 | 107.7 | 114.2 | 101.2 | 108.2 | 114.9 | 108.1 | 115.0 | 114.5 | 116.9 |
| Condensation glide | °C | 7.0 | 4.8 | 8.8 | 6.7 | 4.6 | 6.4 | 4.5 | 4.4 | 3.6 |

| Item | Unit | Com Ex.159 | Ex.432 | Ex.433 | Ex.434 | Ex.435 | Com Ex.161 | Ex.436 | Ex.437 | Ex.438 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 10.0 | 10.0 | 10.0 | 10.0 | 10.0 | 20.0 | 20.0 | 20.0 | 20.0 |
| HFO-1132 (E) | mass% | 20.0 | 40.0 | 50.0 | 60.0 | 70.0 | 10.0 | 20.0 | 30.0 | 40.0 |
| R1234(yf+ze) (r=0.25) | mass% | 60.0 | 40.0 | 30.0 | 20.0 | 10.0 | 60.0 | 50.0 | 40.0 | 30.0 |
| GWP | - | 71 | 70 | 70 | 69 | 69 | 139 | 138 | 138 | 137 |
| COP ratio | relative to R41 | 100.1 | 96.9 | 95.8 | 94.9 | 94.3 | 100.8 | 99.1 | 97.5 | 96.2 |
| Refrigerating capacity r | relative to R41 | 79.1 | 91.6 | 97.5 | 103.3 | 108.8 | 80.4 | 87.2 | 93.6 | 99.7 |
| Condensation glide | °C | 17.2 | 12.4 | 10.1 | 8.1 | 6.3 | 16.1 | 13.9 | 11.6 | 9.4 |

| Item | Unit | Ex.439 | Ex.440 | Com Ex.146 | Ex.441 | Ex.442 | Ex.443 | Ex.444 | Ex.445 | Ex.446 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 20.0 | 20.0 | 30.0 | 30.0 | 30.0 | 30.0 | 30.0 | 40.0 | 40.0 |
| HFO-1132 (E) | mass% | 50.0 | 60.0 | 10.0 | 20.0 | 30.0 | 40.0 | 50.0 | 10.0 | 20.0 |
| R1234(yf+ze) (r=0.25) | mass% | 20.0 | 10.0 | 50.0 | 40.0 | 30.0 | 20.0 | 10.0 | 40.0 | 30.0 |
| GWP | - | 137 | 136 | 205 | 205 | 205 | 204 | 204 | 272 | 272 |
| COP ratio | relative to R41 | 95.2 | 94.4 | 99.9 | 98.3 | 96.9 | 95.8 | 94.9 | 99.2 | 97.8 |
| Refrigerating capacity r | relative to R41 | 105.6 | 111.3 | 88.1 | 94.8 | 101.2 | 107.4 | 113.2 | 95.4 | 102.1 |
| Condensation glide | °C | 7.3 | 5.5 | 13.0 | 10.9 | 8.8 | 6.7 | 4.9 | 10.1 | 8.2 |

**Table 21**

| Item | Unit | Ex.447 | Ex.448 | Ex.449 | Ex.450 | Ex.451 | Ex.452 | Ex.453 | Ex.454 | Com Ex.161 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 40.0 | 40.0 | 50.0 | 50.0 | 50.0 | 60.0 | 60.0 | 70.0 | 80.0 |
| HFO-1132 (E) | mass% | 30.0 | 40.0 | 10.0 | 20.0 | 30.0 | 10.0 | 20.0 | 10.0 | 5.0 |
| R1234(yf+ze) (r=0.25) | mass% | 20.0 | 10.0 | 30.0 | 20.0 | 10.0 | 20.0 | 10.0 | 10.0 | 5.0 |
| GWP | - | 272 | 271 | 339 | 339 | 338 | 406 | 406 | 473 | 540 |
| COP ratio | relative to R41 | 96.7 | 95.7 | 98.9 | 97.7 | 96.6 | 98.8 | 97.7 | 98.8 | 99.2 |
| Refrigerating capacity r | relative to R41 | 108.5 | 114.6 | 102.4 | 109.1 | 115.3 | 108.9 | 115.5 | 114.9 | 117.1 |
| Condensation glide | °C | 6.3 | 4.5 | 7.7 | 6.0 | 4.3 | 5.7 | 4.2 | 4.1 | 3.4 |

| Item | Unit | Com Ex.162 | Ex.455 | Ex.456 | Ex.457 | Ex.458 | Ex.459 | Com Ex.163 | Ex.460 | Ex.461 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 10.0 | 10.0 | 10.0 | 10.0 | 10.0 | 10.0 | 20.0 | 20.0 | 20.0 |
| HFO-1132 (E) | mass% | 20.0 | 30.0 | 40.0 | 50.0 | 60.0 | 70.0 | 10.0 | 30.0 | 40.0 |
| R1234(yf+ze) (r=0.5) | mass% | 60.0 | 50.0 | 40.0 | 30.0 | 20.0 | 10.0 | 60.0 | 40.0 | 30.0 |
| GWP | - | 71 | 70 | 70 | 70 | 69 | 69 | 138 | 137 | 137 |
| COP ratio | relative to R41 | 99.5 | 97.9 | 96.6 | 95.5 | 94.8 | 94.2 | 100.1 | 97.1 | 95.9 |
| Refrigerating capacity r | relative to R41 | 80.4 | 86.8 | 92.8 | 98.5 | 103.9 | 109.1 | 82.0 | 94.8 | 100.7 |
| Condensation glide | °C | 14.9 | 12.9 | 10.9 | 9.1 | 7.4 | 5.9 | 13.8 | 10.1 | 8.3 |

| Item | Unit | Ex.462 | Ex.463 | Ex.464 | Ex.465 | Ex.466 | Ex.467 | Ex.468 | Ex.469 | Ex.470 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 20.0 | 20.0 | 30.0 | 30.0 | 30.0 | 30.0 | 30.0 | 40.0 | 40.0 |
| HFO-1132 (E) | mass% | 50.0 | 60.0 | 5.0 | 20.0 | 30.0 | 40.0 | 50.0 | 10.0 | 20.0 |
| R1234(yf+ze) (r=0.5) | mass% | 20.0 | 10.0 | 55.0 | 40.0 | 30.0 | 20.0 | 10.0 | 40.0 | 30.0 |
| GWP | **-** | 137 | 136 | 205 | 205 | 204 | 204 | 204 | 272 | 272 |
| COP ratio | relative to R41 | 95.0 | 94.4 | 100.1 | 97.8 | 96.6 | 95.6 | 94.9 | 98.8 | 97.6 |
| Refrigerating capacity r | relative to R41 | 106.3 | 111.6 | 86.2 | 96.2 | 102.3 | 108.1 | 113.6 | 96.8 | 103.3 |
| Condensation glide | °C | 6.6 | 5.2 | 11.9 | 9.4 | 7.7 | 6.1 | 4.6 | 8.7 | 7.2 |

| Item | Unit | Ex.471 | Ex.472 | Ex.473 | Ex.474 | Ex.475 | Ex.476 | Ex.477 | Ex.478 | Com Ex.164 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 40.0 | 40.0 | 50.0 | 50.0 | 50.0 | 60.0 | 60.0 | 70.0 | 80.0 |
| HFO-1132 (E) | mass% | 30.0 | 40.0 | 10.0 | 20.0 | 30.0 | 10.0 | 20.0 | 10.0 | 5.0 |
| R1234(yf+ze) (r=0.5) | mass% | 20.0 | 10.0 | 30.0 | 20.0 | 10.0 | 20.0 | 10.0 | 10.0 | 5.0 |
| GWP | - | 271 | 271 | 339 | 339 | 338 | 406 | 406 | 473 | 540 |
| COP ratio | relative to R41 | 96.5 | 95.6 | 98.7 | 97.5 | 96.5 | 98.7 | 97.6 | 98.7 | 99.2 |
| Refrigerating capacity r | relative to R41 | 109.3 | 115.0 | 103.6 | 109.9 | 115.8 | 109.7 | 115.9 | 115.3 | 117.2 |
| Condensation glide | °C | 5.7 | 4.2 | 6.7 | 5.4 | 4.0 | 5.1 | 3.9 | 3.9 | 3.3 |

| Item | Unit | Com Ex.165 | Ex.479 | Ex.480 | Ex.481 | Ex.482 | Com Ex.166 | Ex.483 | Ex.484 | Ex.485 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 10.0 | 10.0 | 10.0 | 10.0 | 10.0 | 20.0 | 20.0 | 20.0 | 20.0 |
| HFO-1132 (E) | mass% | 20.0 | 40.0 | 50.0 | 60.0 | 70.0 | 5.0 | 20.0 | 30.0 | 40.0 |
| R1234(yf+ze) (r=0.75) | mass% | 60.0 | 40.0 | 30.0 | 20.0 | 10.0 | 65.0 | 50.0 | 40.0 | 30.0 |
| GWP | - | 71 | 70 | 69 | 69 | 69 | 138 | 138 | 137 | 137 |
| COP ratio | relative to R41 | 99.0 | 96.2 | 95.3 | 94.6 | 94.1 | 100.4 | 98.0 | 96.7 | 95.6 |
| Refrigerating capacity r | relative to R41 | 81.7 | 93.9 | 99.4 | 104.6 | 109.4 | 79.9 | 90.0 | 96.0 | 101.7 |
| Condensation glide | °C | 12.9 | 9.6 | 8.1 | 6.8 | 5.6 | 12.4 | 10.4 | 8.8 | 7.3 |

**Table 22**

| Item | Unit | Ex.486 | Ex.487 | Ex.488 | Ex.489 | Ex.490 | Ex.491 | Ex.492 | Ex.493 | Ex.494 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 20.0 | 20.0 | 30.0 | 30.0 | 30.0 | 30.0 | 30.0 | 40.0 | 40.0 |
| HFO-1132 (E) | mass% | 50.0 | 60.0 | 10.0 | 20.0 | 30.0 | 40.0 | 50.0 | 10.0 | 20.0 |
| R1234(yf+ze) (r=0.75) | mass% | 20.0 | 10.0 | 50.0 | 40.0 | 30.0 | 20.0 | 10.0 | 40.0 | 30.0 |
| GWP | - | 137 | 136 | 205 | 205 | 204 | 204 | 204 | 272 | 272 |
| COP ratio | relative to R41 | 94.9 | 94.3 | 98.7 | 97.4 | 96.3 | 95.5 | 94.8 | 98.4 | 97.3 |
| Refrigerating capacity r | relative to R41 | 107.0 | 112.0 | 91.1 | 97.5 | 103.4 | 108.9 | 114.0 | 98.2 | 104.4 |
| Condensation glide | °C | 6.0 | 4.9 | 9.4 | 8.1 | 6.7 | 5.4 | 4.3 | 7.4 | 6.2 |

| Item | Unit | Ex.495 | Ex.496 | Ex.497 | Ex.498 | Ex.499 | Ex.500 | Ex.501 | Ex.502 | Com Ex.167 |
|---|---|---|---|---|---|---|---|---|---|---|
| HFO-1132a | mass% | 10.0 | 10.0 | 10.0 | 10.0 | 10.0 | 10.0 | 10.0 | 10.0 | 10.0 |
| R32 | mass% | 40.0 | 40.0 | 50.0 | 50.0 | 50.0 | 60.0 | 60.0 | 70.0 | 80.0 |
| HFO-1132 (E) | mass% | 30.0 | 40.0 | 10.0 | 20.0 | 30.0 | 10.0 | 20.0 | 10.0 | 5.0 |
| R1234(yf+ze) (r=0.75) | mass% | 20.0 | 10.0 | 30.0 | 20.0 | 10.0 | 20.0 | 10.0 | 10.0 | 5.0 |
| GWP | - | 271 | 271 | 339 | 339 | 338 | 406 | 406 | 473 | 540 |
| COP ratio | relative to R41 | 96.3 | 95.5 | 98.4 | 97.3 | 96.4 | 98.5 | 97.5 | 98.6 | 99.1 |
| Refrigerating capacity r | relative to R41 | 110.1 | 115.4 | 104.7 | 110.7 | 116.1 | 110.5 | 116.2 | 115.7 | 117.4 |
| Condensation glide | °C | 5.0 | 3.9 | 5.8 | 4.8 | 3.7 | 4.6 | 3.7 | 3.6 | 3.2 |

## Claims

1. A composition comprising a refrigerant comprising difluoromethane (R32), trans-1,2-difluoroethylene (HFO-1132(E)), 1,3,3,3-tetrafluoropropene (R1234ze), and 1,1-difluoroethylene (HFO-1132a).

2. The composition of claim 1, wherein, when the mass% of R32, HFO-1132(E), R1234ze, and HFO-1132a based on their sum in the refrigerant is respectively represented by x, y, z, and a, provided that 1.5≤a≤10.0, coordinates (x,y,z) in a ternary composition diagram in which the sum of R32, HFO-1132(E), and R1234ze is (100-a) mass% are within the range of a figure surrounded by straight lines AB, BC, CD, DO, and OA that connect the 5 points:
A (74.0, -a+26.0, 0.0),
B (73.9, 0.0, -a+26.1),
C (0.0087a²-2.2743a+59.574, 0.0, -0.0087a²+1.2743a+40.426),
D (0.0, 0.0299a²-3.4018a+76.233, -0.0299a²+2.4018a+23.767), and
O (0.0, 100.0-a, 0.0),
or on the straight lines AB and CD (excluding the points A, B, C and D).

3. The composition of claim 2, wherein the coordinates (x,y,z) are within the range of a figure surrounded by straight lines A'B', B'C, CD, DO, and OA' that connect the 5 points:
A' (59.2, -a+40.8, 0.0),
B' (0.0132a+58.891, 0.0, -1.0132a+41.109),
and C, D and O as defined in claim 2,
or on the straight lines A'B' and CD (excluding the points A', B', C, and D).

4. The composition of any of claims 1-3, wherein the refrigerant further comprises 2,3,3,3-tetrafluoro-1-propene (R1234yf).

5. The composition of claim 4, wherein, when the mass% of R32 is represented by x, the mass% of HFO-1132(E) is represented by y, the total mass% of R1234ze and R1234yf is represented by z, and the mass% of HFO-1132a is represented by a, provided that 1.5≤a≤10.0, based on the sum of R32, HFO-1132(E), R1234ze, R1234yf, and HFO-1132a in the refrigerant, and r = R1234yf/(R1234ze+R1234yf), coordinates (x,y,z) in a ternary composition diagram having R32 as a first vertex, HFO-1132(E) as a second vertex, and the sum of R1234ze and R1234yf as a third vertex are within the range of a figure surrounded by straight lines ABᵣ, BᵣCᵣ, CᵣDᵣ, DᵣO, and OA that connect the following 5 points:
if 1.5≤a≤4.6:
A (74.0, -a+26.0, 0.0),
Bᵣ (73.9, 0.0, -a+26.1),
Cᵣ ((0.0349a²+0.1094a-1.2427)r²+(-0.0202a²+0.0907a-10.591)r+(0.0255a²-2.3816a+59.715), 0.0, -a-x+100.0),
Dᵣ (0.0, (-0.2097a²+1.3435a-2.7435)r²+(0.2312a²-1.507a-5.0597)r+(0.0255a²-3.3816a+76.215), -a-y+100.0), and
O (0.0, 100.0-a, 0.0),
or on the straight lines ABᵣ and CᵣDᵣ (excluding the points A, Bᵣ, Cᵣ, and Dᵣ); or
if 4.6≤a≤10.0:
A (74.0, -a+26.0, 0.0),
Bᵣ (73.9, 0.0, -a+26.1),
Cᵣ ((0.0494a²-0.5728a+1.5901)r₂+(-0.037a2+0.763a-13.326)r+(0.0062a²-2.2383a+59.465), 0.0, -a-x+100.0),
Dᵣ (0.0, (-0.0648a²+1.1685a-5.0037)r²+(0.0849a²-1.2762a-3.0253)r+(0.0262a²-3.346a+76.036), -a-y+100.0), and
O (0.0, 100.0-a, 0.0),
or on the straight lines ABᵣ and CᵣDᵣ (excluding the points A, Bᵣ, Cᵣ, and Dᵣ).

6. The composition of claim 5, wherein the coordinates (x,y,z) are within the range of a figure surrounded by straight lines ABᵣ', Bᵣ'Cᵣ, CᵣDᵣ, DᵣO, and OA that connect the following 5 points:
if 1.5≤a≤4.6:
Bᵣ' ((-0.043a²+0.3269a-0.5935)r²+(-0.0188a²+0.018a+0.3153)r +(0.0202a²-0.0907a+58.991), 0.0, -a-x+100.0),
and A, Cᵣ , Dᵣ and O as defined in claim 5 for 1.5≤a≤4.6,
or on the straight lines ABᵣ' and CᵣDᵣ (excluding the points A, Bᵣ', Cᵣ, and Dᵣ); or
if 4.6≤a≤10.0:
Bᵣ' ((-0.0077a²+0.1312a-0.4401)r+(0.0013a²-0.0223a+59.075), 0.0, -a-x+100.0),
and A, Cᵣ, Dᵣ and O as defined in claim 5 for 4.6≤a≤10.0,
or on the straight lines ABᵣ' and CᵣDᵣ (excluding the points A, Bᵣ', Cᵣ, and Dᵣ).

7. Use of the composition of any of claims 1-6 as an alternative refrigerant for R410A.

8. The composition of any of claims 1-6, which further comprises a refrigeration oil.

9. The use of the composition of claim 8 as a working fluid for a refrigerating machine.

10. A refrigerating machine comprising the composition of any of claims 1-6 as a working fluid.

11. A method for operating a refrigerating machine, comprising circulating the composition of any of claims 1-6 as a working fluid in a refrigerating machine.

## Patentansprüche

1. Zusammensetzung, umfassend ein Kältemittel das Difluormethan (R32), trans-1,2-Difluorethylen (HFO-1132(E)), 1,3,3,3-Tetrafluorpropen (R1234ze) und 1,1-Difluorethylen (HFO-1132a) umfasst.

2. Zusammensetzung nach Anspruch 1, wobei, wenn die Massen-% von R32, HFO-1132 (E), R1234ze und HFO-1132a, bezogen auf deren Summe in dem Kältemittel, jeweils durch x, y, z bzw. a dargestellt werden, mit der Maßgabe, dass 1,5<a≤10,0, Koordinaten (x, y, z) in einem ternären Zusammensetzungsdiagramm, in dem die Summe von R32, HFO-1132 (E) und R1234ze (100-a) Massen-% beträgt, innerhalb des Bereichs einer Figur liegen, die von Geraden AB, BC, CD, DO und OA umgeben ist, die die 5 Punkte verbinden:
A (74,0, -a+26,0, 0,0),
B (73,9, 0,0, -a+26,1),
C (0,0087a²-2,2743a+59,574, 0,0, -0,0087a²+1,2743a+40,426),
D (0,0, 0,0299a²-3,4018a+76,233, -0,0299a²+2,4018a+23,767), und
O (0,0, 100,0-a, 0,0),
oder auf den Geraden AB und CD (mit Ausnahme der Punkte A, B, C und D).

3. Zusammensetzung nach Anspruch 2, wobei die Koordinaten (x, y, z) innerhalb des Bereichs einer Figur liegen, die von Geraden A'B', B'C, CD, DO und OA' umgeben ist, die die 5 Punkte verbinden:
A' (59,2, -a+40,8, 0,0),
B' (0,0132a+58,891, 0,0, -1,0132a+41,109),
und C, D und O, wie in Anspruch 2 definiert,
oder auf den Geraden A'B' und CD (mit Ausnahme der Punkte A', B', C und D).

4. Zusammensetzung nach einem der Ansprüche 1-3, wobei das Kältemittel weiter 2,3,3,3-Tetrafluor-1-propen (R1234yf) umfasst.

5. Zusammensetzung nach Anspruch 4, wobei, wenn die Massen-% von R32 durch x dargestellt werden, die Massen-% von HFO-1132 (E) durch y dargestellt werden, die Gesamtmassen-% von R1234ze und R1234yf durch z dargestellt werden und die Massen-% von HFO-1132a durch a dargestellt werden, mit der Maßgabe, dass 1,5≤a≤10,0, bezogen auf die Summe von R32, HFO-1132(E), R1234ze, R1234yf und HFO-1132a in dem Kältemittel, und r = R1234yf/(R1234ze+R1234yf), Koordinaten (x, y, z) in einem ternären Zusammensetzungsdiagramm, das R32 als ersten Eckpunkt, HFO-1132(E) als zweiten Eckpunkt und die Summe von R1234ze und R1234yf als dritten Eckpunkt aufweist, innerhalb des Bereichs einer Figur liegen, die von Geraden ABᵣ, BᵣCᵣ, CᵣDᵣ, DᵣO und OA umgeben ist, die die folgenden 5 Punkte verbinden:
wenn 1,5≤a≤4,6:
A (74,0, -a+26,0, 0,0),
Bᵣ (73,9, 0,0, -a+26,1),
Cᵣ ((0,0349a²+0,1094a-1,2427)r²+(-0,0202a²+0,0907a-10,591)r+(0,0255a²-2,3816a+59,715), 0,0, -a-x+100,0),
Dᵣ (0,0, (-0,2097a²+1,3435a-2,7435)r²+(0,2312a²-1,507a-5,0597)r+(0,0255a²-3,3816a+76,215)-a-y+100,0), und
O (0,0, 100,0-a, 0,0),
oder auf den Geraden ABᵣ und CᵣDᵣ (mit Ausnahme der Punkte A, Bᵣ, Cᵣ und Dᵣ); oder
wenn 4,6<a≤10,0:
A (74,0, -a+26,0, 0,0),
Bᵣ (73,9, 0,0, -a+26,1),
Cᵣ ((0,0494a²-0,5728a+1,5901)r₂+(-0,037a²+0,763a-13,326)r+(0,0062a²-2,2383a+59,465), 0,0, -a-x+100,0),
Dᵣ (0,0, (-0,0648a²+1,1685a-5,0037)r²+(0,0849a²-1,2762a-3,0253)r+(0,0262a²-3,346a+76,036)-a-y+100,0), und
O (0,0, 100,0-a, 0,0),
oder auf den Geraden ABᵣ und CᵣDᵣ (mit Ausnahme der Punkte A, Bᵣ, Cᵣ und Dᵣ).

6. Zusammensetzung nach Anspruch 5, wobei die Koordinaten (x, y, z) innerhalb des Bereichs einer Figur liegen, die von Geraden ABᵣ', Bᵣ'Cᵣ, CᵣDᵣ, DᵣO und OA umgeben ist, die die folgenden 5 Punkte verbinden:
wenn 1,5≤a≤4,6:
Bᵣ' ((-0,043a²+0,3269a-0,5935)r²+(-0,0188a²+0,018a+0,3153)r+(0,0202a²-0,0907a+58,991), 0,0, -a-x+100,0),
und A, Cᵣ, Dᵣ und O, wie in Anspruch 5 für 1,5≤a≤4,6 definiert,
oder auf den Geraden ABᵣ' und CᵣDᵣ (mit Ausnahme der Punkte A, Bᵣ', Cᵣ, und Dᵣ); oder
wenn 4,6≤a≤10,0:
Bᵣ' ((-0,0077a²+0,1312a-0,4401) r+ (0,0013a²-0,0223a+59,075) 0,0, -a-x+100,0),
und A, Cᵣ, Dᵣ und O, wie in Anspruch 5 für 4,6≤a≤10,0 definiert,
oder auf den Geraden ABᵣ' und CᵣDᵣ (mit Ausnahme der Punkte A, Br', Cᵣ, und Dᵣ).

7. Verwendung der Zusammensetzung nach einem der Ansprüche 1-6 als Ersatzkältemittel für R410A.

8. Zusammensetzung nach einem der Ansprüche 1-6, die weiter ein Kältemaschinenöl umfasst.

9. Verwendung der Zusammensetzung nach Anspruch 8 als Arbeitsfluid für eine Kältemaschine.

10. Kältemaschine, umfassend die Zusammensetzung nach einem der Ansprüche 1-6 als Arbeitsfluid.

11. Verfahren zum Betrieb einer Kältemaschine, umfassend das Zirkulieren der Zusammensetzung nach einem der Ansprüche 1-6 als Arbeitsfluid in einer Kältemaschine.

## Revendications

1. Composition comprenant un réfrigérant comprenant du difluorométhane (R32), du trans-1,2-difluoroéthylène (HFO-1132 (E)), du 1,3,3,3-tétrafluoropropène (R1234ze) et du 1,1-difluoroéthylène (HFO-1132a).

2. Composition selon la revendication 1, dans laquelle, lorsque le % en masse de R32, de HFO-1132 (E), de R1234ze et de HFO-1132a sur la base de leur somme dans le réfrigérant est respectivement représenté par x, y, z et a, à condition que 1,5<a≤10,0, les coordonnées (x,y,z) dans un diagramme de composition ternaire dans lequel la somme de R32, de HFO-1132 (E) et de R1234ze est de (100-a) % en masse sont dans la plage d'une figure entourée par les lignes droites AB, BC, CD, DO et OA qui relient les 5 points :
A (74,0, -a+26,0, 0,0),
B (73,9, 0,0, -a+26,1),
C (0,0087a²-2,2743a+59,574, 0,0, -0,0087a²+1,2743a+40,426),
D (0,0, 0,0299a²-3,4018a+76,233, -0,0299a²+2,4018a+23,767), et
O (0,0, 100,0-a, 0,0),
ou sur les lignes droites AB et CD (à l'exclusion des points A, B, C et D).

3. Composition selon la revendication 2, dans laquelle les coordonnées (x,y,z) sont dans la plage d'une figure entourée par les lignes droites A'B', B'C, CD, DO et OA' qui relient les 5 points :
A' (59,2, -a+40,8, 0,0),
B' (0,0132a+58,891, 0,0, -1,0132a+41,109),
et C, D et O tels que définis dans la revendication 2,
ou sur les lignes droites A'B' et CD (à l'exclusion des points A', B', C et D).

4. Composition selon l'une quelconque des revendications 1 à 3, dans laquelle le réfrigérant comprend en outre du 2,3,3,3-tétrafluoro-1-propène (R1234yf).

5. Composition selon la revendication 4, dans laquelle, lorsque le % en masse de R32 est représenté par x, le % en masse de HFO-1132 (E) est représenté par y, le % en masse total de R1234ze et de R1234yf est représenté par z et le % en masse de HFO-1132a est représenté par a, à condition que 1,5≤a≤10,0, sur la base de la somme de R32, de HFO-1132 (E), de R1234ze, de R1234yf et de HFO-1132a dans le réfrigérant, et r = R1234yf/(R1234ze+R1234yf), les coordonnées (x,y,z) dans un diagramme de composition ternaire présentant R32 comme premier sommet, HFO-1132 (E) comme deuxième sommet et la somme de R1234ze et de R1234yf comme troisième sommet sont dans la plage d'une figure entourée par les lignes droites ABᵣ, BᵣCᵣ, CᵣDᵣ, DᵣO et OA qui relient les 5 points suivants :
si 1,5≤a≤4,6 :
A (74,0, -a+26,0, 0,0),
Bᵣ (73,9, 0,0, -a+26,1),
Cᵣ ((0,0349a²+0,1094a-1,2427)r²+(-0,0202a²+0,0907a-10,591) r+ (0,0255a²-2,3816a+59,715), 0,0, -a-x+100,0),
Dᵣ (0,0, (-0,2097a²+1,3435a-2,7435) r²+ (0,2312a²-1,507a- 5,0597) r+ (0,0255a²-3,3816a+76,215), -a-y+100,0), et
O (0,0, 100,0-a, 0,0),
ou sur les lignes droites ABᵣ et CᵣDᵣ (à l'exclusion des points A, Bᵣ, Cᵣ et Dᵣ) ; ou
si 4,6<a≤10,0 :
A (74,0, -a+26,0, 0,0),
Bᵣ (73,9, 0,0, -a+26,1),
Cᵣ ((0,0494a²-0,5728a+1,5901)r₂+(-0,037a2+0,763a-13,326) r+ (0,0062a²-2,2383a+59,465), 0,0, -a-x+100,0),
Dᵣ (0,0, (-0,0648a²+1,1685a-5,0037) r²+ (0,0849a²-1,2762a-3,0253) r+ (0,0262a²-3,346a+76,036) -a-y+100,0), et
O (0,0, 100,0-a, 0,0),
ou sur les lignes droites ABᵣ et CᵣDᵣ (à l'exclusion des points A, Bᵣ, Cᵣ et Dᵣ).

6. Composition selon la revendication 5, dans laquelle les coordonnées (x,y,z) sont dans la plage d'une figure entourée par les lignes droites ABᵣ', Bᵣ'Cᵣ, CᵣDᵣ, DᵣO et OA qui relient les 5 points suivants :
si 1,5≤a≤4,6 :
Bᵣ' ((-0,043a²+0,3269a-0,5935) r²+ (-0,0188a²+0,018a+0,3153) r+ (0,0202a²-0,0907a+58,991), 0,0, -a-x+100,0),
et A, Cᵣ, Dᵣ et O tels que définis dans la revendication 5 pour 1,5≤a≤4,6,
ou sur les lignes droites ABᵣ' et CᵣDᵣ (à l'exclusion des points A, Bᵣ', Cᵣ et Dᵣ) ; ou
si 4,6≤a≤10,0 :
Bᵣ' ((-0,0077a²+0,1312a-0,4401) r+ (0,0013a²-0,0223a+59,075) 0,0, -a-x+100,0),
et A, Cᵣ, Dᵣ et O tels que définis dans la revendication 5 pour 4,6≤a≤10,0,
ou sur les lignes droites ABᵣ' et CᵣDᵣ (à l'exclusion des points A, Bᵣ', Cᵣ et Dᵣ).

7. Utilisation de la composition selon l'une quelconque des revendications 1 à 6 en tant que réfrigérant alternatif au R410A.

8. Composition selon l'une quelconque des revendications 1 à 6, qui comprend en outre une huile de réfrigération.

9. Utilisation de la composition selon la revendication 8 en tant que fluide de travail pour une machine de réfrigération.

10. Machine de réfrigération comprenant la composition selon l'une quelconque des revendications 1 à 6 en tant que fluide de travail.

11. Procédé pour faire fonctionner une machine de réfrigération, comprenant la circulation de la composition selon l'une quelconque des revendications 1 à 6 en tant que fluide de travail dans une machine de réfrigération.
